# EUROPEAN PATENT SPECIFICATION

(11) **EP 3 945 479 B1**
(45) Date of publication and mention of the grant of the patent: **02.04.2025**
(21) Application number: 21188080.2
(22) Date of filing: 27.07.2021
(51) Int. Cl.: G06Q 10/06

(54) **SYSTEM AND METHOD FOR REGULATING A BUILDING ENVIRONMENT**
SYSTEM UND VERFAHREN ZUR REGELUNG EINER GEBÄUDEUMGEBUNG
SYSTÈME ET PROCÉDÉ DE RÉGULATION DE L'ENVIRONNEMENT D'UN BÂTIMENT

(30) Priority: 30.07.2020 US 202016943702; 31.07.2020 US 202016944659; 31.07.2020 US 202016944709
(43) Date of publication of application: 02.02.2022
(73) Proprietor: Hubstar International Limited, London NW6 1TB (GB)
(72) Inventor: VATIDIS, Stefanos, London, SE19 3HF (GB); MEQUINION, Denis, London, SE19 3HF (GB)
(74) Representative: Marks & Clerk LLP

(56) References cited:
- WO-A2-2014/140183
- US-A1- 2014 046 716
- US-A1- 2015 363 728

## Description

### TECHNICAL FIELD

The present disclosure relates to systems and methods for regulating an environment of areas of a building. In particular, but without limitation, this disclosure relates to systems and method for regulating areas of building environments based on resource allocations.

### BACKGROUND

Building environment regulation systems regulate the environment of one or more areas of a building. The environment of the one or more areas of the building may be described using environmental conditions such as temperature, lighting, ventilation and air quality. Existing building environment regulation systems are reactive, e.g. depend on sensors to achieve and maintain environmental conditions.

Resource-allocation systems facilitate the allocation of resources at various time periods. Many resources are allocated on a recurring basis to a series of recurring events, e.g. a given resource may be allocated to an event occurring every week at a particular time and date. For example, a confluence (e.g. a meeting) may occur or at regular intervals and resources for that confluence accordingly allocated at the regular intervals. However, existing resource allocation systems have significant limitations in handling series of recurring events. These existing systems determine time periods for the events without taking into account factors that could render at least some of these time periods unviable. By determining unviable time periods, these systems result in events being scheduled at unviable times necessitating rescheduling of these events.

United States Patent Application Publication US2015/363728A1 relates to a method and apparatus for managing resource allocation in view of energy footprint considerations, wherein allocation of resources is based on factors that contribute to energy consumption. The resources are then ordered in order of their energy consumption so that resources with a smallest level of energy consumption are ranked highest, wherein the rankings are visually presented to the user.

### SUMMARY

Aspects described herein improve the regulation of the environment of areas of a building. Existing building environment regulation systems depending on sensors have difficulty achieving or simply cannot achieve desired environmental conditions at a given time. Achieving desired environmental conditions, e.g. heating or cooling a building to a desired temperature or a desired air quality, takes time and, by their nature, sensors can only detect changes as they occur, thus these existing building environment regulation systems can only begin altering the environment once such changes are detected and cannot proactively prepare for them. The improvements provided by the present aspects facilitate the use of known resource allocations to one or more time periods to achieve the desired environmental conditions at the one or more time periods. For example, using the resource allocations, the building environment regulation system may be able to determine an expected occupancy of one or more areas of the building. The desired environmental conditions of the building depend on the occupancy of the building, e.g. whether areas of the building should be heated or cooled may depend on whether the areas of the building are occupied and as humans emit body heat the amount by which areas of the building are heated or cooled may depend on the number of occupants. Furthermore, time is needed to achieve a desired temperature, hence, being able to determine an expected occupancy of the areas of the building facilitates achieving the desired temperature before the occupants arrive.

Aspects described herein also improve scheduling of a series of recurring events by utilizing data relating to the availability of resources to be utilized for instances of the series of recurring events. These improvements result in the prevention of and/or reduction in instances of the series of recurring events being scheduled at unviable time periods, e.g. time periods where resources needed for the event are unavailable. This reduction in the scheduling of events at unviable time periods results in fewer reschedulings and/or impromptu cancellations of events. In a computer-implemented resource-allocation system, communicating reschedulings and impromptu cancellations of events consumes network bandwidth and computational resources. Thus, reducing these reduces the network bandwidth and computational resources consumed by a computer-implemented resource-allocation system.

The improved scheduling of a series of recurring events may be utilized to further improve the regulation of the environment of areas of the building. The improved scheduling of the series of recurring events facilitates the scheduling of all or at least a much greater proportion of resource allocations as compared to existing systems. Due to the difficulty of scheduling recurring events with existing resource allocation systems, allocations are only scheduled for a small portion of the resources with most resources being used on an ad-hoc basis. For example, people may not reserve a desk each day as they do not have information about which other users may be in and using each desk on a given day, and instead use desks on an ad-hoc basis. Allocations of resources may also be inaccurate as conflicting allocations may remain scheduled rather than being avoided as in the present system. By facilitating the scheduling of all or at least a much greater proportion of resource allocations as compared to existing systems, the scheduled resource allocations better reflect the actual usage of resources. Thus, the resource allocations used by the building environment regulation system are more accurate consequently improving the regulation of the environment of areas of the building.

According to a first aspect, there is provided a system for regulating an environment of one or more areas of a building as recited in claim 1.

The at least one of the one or more resources may be located within the at least one of the one or more areas of the building. The at least one of the one or more resource may be located at the one or more areas of the building. The at least one of the one or more resources may be located near the one or more areas of the building, e.g. within a specified distance of the one or more areas of the building. The distance may be any suitable distance, e.g. 5 to 100 meters. At least one of the one or more resources being proximate to at least one of the one or more resources of the building encompasses the at least one of the one or more resources being located at, within or near the at least one of the one or more areas of the building.

The system may further comprise a control interface comprising one or more processors, the one or more processors configured to: obtain the indication of the allocation of one or more resources at the viable time period for at least one event of a series of recurring events; derive the one or more control parameters using the indication of the allocation of the one or more resources at the viable time period; and send, to the control system, the one or more control parameters.

The control interface may facilitate operating existing control systems using scheduled allocations provided by the resource allocation engine.

The environment system may comprise any or any combination of: a heating system for heating at least one of the one or more areas of the building; a cooling system for cooling at least one of the one or more areas of the building; a lighting system for lighting at least one of the one or more areas of the building; and/or a ventilation system for ventilating at least one of the one or more areas.

The one or more environmental conditions of the at least one of the one or more areas of the building may comprise any or any combination of: a temperature of the at least one of the one or more areas of the building; lighting of the at least one of the one or more areas of the building; and/or an air quality of the at least one or more areas of the building.

The operation of the environment system may be initiated at a preparation time prior to the viable time period.

The preparation time may be based on an amount of time required to obtain the one or more environmental conditions using the environment control system.

The one or more environmental conditions may comprise a temperature of the at least one of the one or more areas of the building. The amount of time may be based on a heating and/or cooling curve.

The amount of time may be based on the number of persons proximate to the at least one of the one or more areas of the building at the viable time period.

According to a second aspect, there is provided a computer-implemented method for regulating an environment of one or more areas of a building according to claim 9

The method may further comprise: obtaining the indication of the allocation of one or more resources at the viable time period for the at least one event of the series of recurring events; and deriving the one or more control parameters using the indication of the allocation of the one or more resources for the at least one event of the series of recurring events.

The derivation of the one or more control parameters may additionally use an indication of an allocation of one or more resources at a second viable time period for a second at least one event of a second series of recurring events.

Allocating resources to each event of a series of recurring events by allocating resources to a respective viable time period that is determined based on resource availability data increases the likelihood that appropriate resource(s) are available for each event. This prevents or at least reduces events being scheduled at unviable time periods, e.g. time periods where resources needed for the event are unavailable. This prevention or at least reduction in the scheduling of events at unviable time periods results in fewer reschedulings and/or impromptu cancellations of events. As communicating reschedulings and impromptu cancellations of events consumes network bandwidth and computational resources, the consumption of network bandwidth and computational resource are correspondingly reduced.

The provided method may include receiving a request to allocate one or more resources to a first event, wherein the request specifies a time interval within which the one or more resources are to be allocated; obtaining first resource availability data indicative of an availability of the one or more resources during the time interval; determining, based on the first resource availability data, a first time period for the first event; and allocating the one or more resources to the first time period.

Allocating resources to a first event by allocating resources to a first time period determined based on resource availability data increases the likelihood that appropriate resource(s) are available for the further event. This prevents or at least reduces the likelihood of the first event being scheduled at an unviable time period, e.g. time periods where resources needed for the first event are unavailable. This may reduce network bandwidth and computational resource consumption for the reasons given above. Furthermore, specifying that the first time period is within a first time interval, rather than constraining the first time period more tightly, e.g., by specifying that the first time period must be one of one or more time periods, reduces the likelihood that it will not be possible to determine a suitable first time period. This may prevent or at least reduce the likelihood that an additional modified request needs to be made in order to successfully allocate resources to the first event. Sending, receiving and processing such additional modified requests consumes computational resources and network bandwidth. Hence, by preventing or at reducing the likelihood that such additional modified requests are made, computational resource and network bandwidth consumption are correspondingly reduced.

At least one of the desired time periods may be based on the first time period.

Basing at least one of the desired time periods on the first time period may increase the predictability of the at least one of the desired time periods and, consequently, the predictability of the corresponding at least one of the viable time periods. Increasing the predictably of the at least one of the viable time periods increases the memorability of the at least one of the viable time periods reducing the likelihood of impromptu cancellations, and correspondingly reducing computational resource and network bandwidth consumption associated therewith.

For at least one event of the series of recurring events, determining the viable time period may include: determining, based on the resource availability data, that at least one of the one or more resources is unavailable at the desired time period; in response to determining that the at least one of the one or more resources is unavailable at the desired time period, determining the one or more permissibly adjusted time periods from the one or more adjustment criteria; and setting the viable time period to be one of the one or more permissibly adjusted time periods.

Determining the viable time period to be one of one or more permissibly adjusted time periods where at least one of the one or more resources is unavailable at the desired time period prevents the one or more resources from being allocated to the desired time period where at least one of the one or more resources are unavailable at the desired time period. If the one or more resources were to be allocated to the desired time period, this would require an impromptu cancellation or rescheduling which consumes computational resources and network bandwidth. Thus, preventing this reduces computational resource and network bandwidth consumption.

Setting the viable time period to be the one of the one permissibly adjusted time periods may include determining, based on the resource availability data, that the at least one of the one or more resources are available at the one of the one or more permissibly adjusted time periods.

Determining that the at least one of the one or more resources are available at the one of the one or more permissibly adjusted time periods at which the one or more resources are to be allocated prevents or at least reduces the likelihood that rescheduling or impromptu cancellation will be required because of an unavailability of the at least one of the one or more resources. As rescheduling and impromptu cancellation consume network bandwidth and computational resources, network bandwidth and computational resource consumption are correspondingly reduced.

The one or more requests may include a request to allocate a desired plurality of resources including the one or more resources and one or more unavailable resources. The provided method may include obtaining resource importance data indicative of a relative importance of the at least one of the one or more resources and the one or more unavailable resources. Setting the viable time period may include determining, based on the resource importance data, that the at least one of the one or more resources is of greater importance than the one or more unavailable resources.

Setting the viable time period based on the at least one of the one or more resources being of greater importance than the one or more unavailable resources may facilitate allocation of the one or more resources to time periods in circumstances where not all of the desired plurality of resources are available but at least one of the one or more resources of greater importance, e.g. required resources, are available. This may facilitate scheduling of events in circumstances where there is no viable time period at which all of the one or more resources are available. Without such functionality, additional modified requests may need to be made in order to find a time period at which the at least one of the resources of greater importance are available. For example, a user would otherwise manually make further requests removing resources from the request which they consider to be less important. As making each of these additional modified requests consumes network bandwidth and computational resources, by avoiding these, computational bandwidth and network resource usage may be correspondingly reduced.

The one or more requests may include one or more repetition objectives for specifying the corresponding desired time period for each event.

The one or more repetition objectives may include one or more of a recurrence definition, a periodicity definition, a day reference definition and/or a named day definition.

Utilizing repetition objectives, e.g. of the types described, increase maintainability of systems implementing the provided method by providing a precise but flexible mechanism by which the desired time periods may be defined.

The one or more adjustment criteria may include one or more of a time range; a date range; a time flexibility parameter; a date flexibility parameter; a plurality of time alternatives; and/or a plurality of date alternatives.

Utilizing one or more of the specified adjustment criteria increase maintainability of systems implementing the provided method by facilitating easier and more precise specification of often desired adjustment criteria.

The one or more adjustment criteria may include one or more adjustment constraints specifying limitations to the permissible adjustments to the desired time period.

The one or more adjustment constraints may include one or more exclusion indicators specifying one or more time periods excluded from the one or more permissibly adjusted time periods and/or a repetition restriction specifying a minimum time interval between the one or more permissibly adjusted time periods and a previous viable time period.

Specifying limitations the permissible adjustments to the desired time period, e.g. using one or more exclusion indicators, may prevent or at least reduce the likelihood that the one or more resources are allocated to a time period that is unwanted or undesired. This reduces the likelihood of reschedulings or impromptu cancellations being required. As these consume network bandwidth and computational resources, network bandwidth and computational resource consumption are reduced.

The one or more resources may include one or more persons.

Due to their mobile nature and unpredictable schedules, persons are a type of resource that are particularly difficult to allocate to time periods. Thus, the benefits of the provided method may be particularly pronounced for allocating one or more persons.

The one or more resources may include one or more locations for at least one event of the series of recurring events.

The availability of locations, such as meeting rooms, is often dependent on persons' schedules, so, as a result of their unpredictable schedules, may itself be unpredictable. Thus, the benefits of the provided method may be particularly pronounced for allocation one or more locations.

For at least one event of the series of recurring events, determining the viable time period may include: providing, to the one or more persons, one or more permissibly adjusted time period options; receiving one or more indications of one or more preferred time periods, wherein the one or more indications are based on one or more inputs by at least one of the one or more persons in response to the provision of the one or more permissibly adjusted time period options; and determining the viable time period based on the received one or more indications of the one or more preferred time periods.

Providing the one or more permissibly adjusted time period options to the one or more persons may include sending, to one or more computing devices of the one or more persons, the one or more permissibly adjusted time period options.

The one or more permissibly adjusted time period options may include the viable time period. The at least one of the one or more inputs may include a selection of the viable time period.

Determining the viable time period based on indications based on one or more inputs by at least one of the one or more person may reduce the likelihood that the at least one of the one or more person is, in fact, unavailable at the supposedly viable time period, despite this not being indicated by the resource availability data. This reduces the likelihood of reschedulings and impromptu cancellations and, as these consume network bandwidth and computational resources, network bandwidth and computational resource consumption are reduced.

The provided method may include, for at least one event of the series of recurring events: obtaining preference data indicative of one or more time period preferences of at least one of the one or more persons. The determination of the viable time period for the at least one event may be based on the preference data.

Utilizing preference data for the determination of the viable time period may reduce the likelihood that at least one of the one or more persons become unavailable after the initial allocation of the at least one of the one or more persons to the viable time period. This reduces the likelihood that reschedulings and impromptu cancellations are required. As these consume network bandwidth and computational resources, network bandwidth and computational resource consumption are reduced.

The series of recurring events may be a series of recurring confluences.

Confluences involve persons, who are known to have unpredictable schedules, meaning that recurring confluences are particularly difficult to schedule. Therefore, the benefits of the provided method may be particularly pronounced when used for scheduling confluences.

The provided method may include obtaining, for at least one event of the series of recurring events, updated resource availability data indicative of an updated availability of the one or more resources during the viable time period; determining, based on the updated resource availability data, an updated viable time period for the at least one event, wherein the updated viable time period is either the desired time period or a permissibly adjusted time period; and allocating the one or more resources, for the at least one event, to the updated viable time period.

Determining the updated viable time period may include: determining, based on the updated resource availability data, that at least one of the one or more resources is unavailable at the previous viable time period; in response to determining that the at least one of the one or more resources is unavailable at the viable time period, determining, based on the updated resource availability data, that the at least one of the one or more resources is available at one or more other time periods, wherein each of the one or more other time periods is the desired time period or a permissibly adjusted time period; and setting the updated viable time period to be one of the one or more other time periods.

Utilizing updated resource availability data to update the viable time period for at least one event increases the likelihood that appropriate resource(s) are available for the at least one event at the updated viable time period. This prevents or at least reduces the likelihood that the resources needed for the at least one event are unavailable at the updated viable time period. This reduces the likelihood that impromptu cancellations or further reschedulings will be required. As impromptu cancellations and further reschedulings consume computational resources and network bandwidth, by reducing these, computational resource and network bandwidth consumption are reduced.

### BRIEF DESCRIPTION OF THE DRAWINGS

Arrangements of the present invention will be understood and appreciated more fully from the following detailed description, made by way of example only and taken in conjunction with drawings in which:
Figure 1A shows a schematic detailing a system for regulating an environment of one or more areas of a building;
Figure 1B shows a method for regulating on environment of one or more areas of a building according to an embodiment;
Figure 1C shows a method for interfacing with a control system;
Figure 1D shows a schematic detailing a computer system for allocating resources to a series of recurring events in accordance with an embodiment;
Figure 2 shows a method for scheduling a series of recurring events according to an embodiment;
Figure 3 shows methods for determining a viable time period for one or more events according to embodiments;
Figure 4 shows a method for updating one or more time periods based on updated resource availability data according to an embodiment;
Figure 5 shows a computing device using which the embodiments described herein may be implemented;
Figure 6 shows a method for generating a resource allocation plan according to an embodiment;
Figure 7 shows a method for updating a resource allocation plan according to an embodiment;
Figure 8 shows a method for updating a resource application plan according to an embodiment;
Figure 9 shows a method for allocating resources for a confluence according to an embodiment;
Figure 10 shows a method for identifying a preferred time period of one or more time period options according to an embodiment; and
Figure **11** shows a method for identifying a preferred time period of one or more time period options according to an embodiment.

### DETAILED DESCRIPTION

The embodiments described herein improve the regulation of the environment of areas of a building. Existing building environment regulation systems depending on sensors have difficulty achieving or simply cannot achieve desired environmental conditions at a given time. Achieving desired environmental conditions, e.g. heating or cooling a building to a desired temperature or a desired air quality, takes time and, by their nature, sensors can only detect changes as they occur, thus these existing building environment regulation systems can only begin altering the environment once such changes are detected and cannot proactively prepare for them. The improvements provided by the present aspects facilitate the use of known resource allocations to one or more time periods to achieve the desired environmental conditions at the one or more time periods. For example, using the resource allocations, the building environment regulation system may be able to determine an expected occupancy of one or more areas of the building. The desired environmental conditions of the building depend on the occupancy of the building, e.g. whether areas of the building should be heated or cooled may depend on whether the areas of the building are occupied and as humans emit body heat the amount by which areas of the building are heated or cooled may depend on the number of occupants. Furthermore, time is needed to achieve a desired temperature, hence, being able to determine an expected occupancy of the areas of the building facilitates achieving the desired temperature before the occupants arrive.

The embodiments described herein also aim to improve scheduling of a series of recurring events by utilizing data relating to the availability of resources to be utilized for instances of the series of recurring events. These improvements result in the prevention of and/or reduction in instances of the series of recurring events being scheduled at unviable time periods, e.g. time periods where resources needed for the event are unavailable. This reduction in the scheduling of events at unviable time periods results in fewer reschedulings and/or impromptu cancellations of events. In a computer-implemented resource-allocation system, communicating reschedulings and impromptu cancellations of events consumes network bandwidth and computational resources. Thus, reducing these reduces the network bandwidth and computational resources consumed by a computer-implemented resource-allocation system.

The improved scheduling of a series of recurring events may be utilized to further improve the regulation of the environment of areas of the building. The improved scheduling of the series of recurring events facilitates the scheduling of all or at least a much greater proportion of resource allocations as compared to existing systems. Due to the difficulty of scheduling recurring events with existing resource allocation systems, allocations are only scheduled for a small portion of the resources with most resources being used on an ad-hoc basis. For example, people may not reserve a desk each day as they do not have information about which other users may be in and using each desk on a given day, and instead use desks on an ad-hoc basis. Allocations of resources may also be inaccurate as conflicting allocations may remain scheduled rather than being avoided as in the present system. By facilitating the scheduling of all or at least a much greater proportion of resource allocations as compared to existing systems, the scheduled resource allocations better reflect the actual usage of resources. Thus, the resource allocations used by the building environment regulation system are more accurate consequently improving the regulation of the environment of areas of the building.

### Building Environment Control System

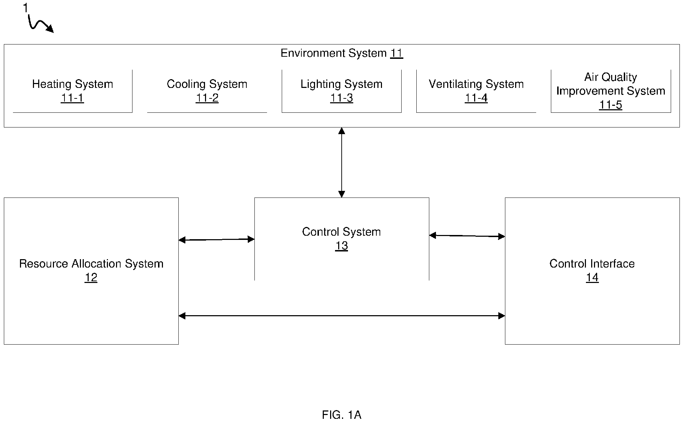

Figure 1A shows a schematic detailing a system 1 for regulating an environment of one or more areas of a building in accordance with an embodiment.

The system 1 includes an environment system 11. The environment system **11** alters the environment, e.g. the environmental conditions, of at least one of the one or more areas of the building. The one or more areas of the building may be a plurality of areas, and the environment system may alter the environment of one or multiple of the plurality of areas. The one or more areas of the building may be any or any combination of one or more floors of the building or one or more portions thereof; one or more rooms of the building or a portion thereof; one or more areas corresponding to one or more workspaces in the building; one or more areas corresponding to one or more items of equipment in the building; and/or one or more outdoor areas connected to the building, e.g. one or more terraces and/or balconies of the building.

The environment system 11 may include a heating system 11-1. The heating system 11-1 may include one or more apparatuses for heating at least one of the one or more areas of the building. For example, the heating system 11-1 may include any or any combination of: one or more radiators; one or more underfloor heating systems; one or more heat pumps; and/or one or more warm air heating systems.

The environment system 11 may include a cooling system 11-2. The cooling system may include one or more apparatuses for cooling at least one of the one or more areas of the building. For example, the cooling system 11-2 may include any or any combination of: one or more air conditioners; one or more air coolers; one or more evaporative coolers; and/or one or more heat pumps.

The environment system 11 may include a lighting system 11-3. The lighting 11-3 may include system may include one or more apparatuses for lighting at least one of the one or more areas of the building. For example, the lighting system 11-3 may include any or any combination of: one or more fluorescent lamps; one or more incandescent lamps; one or more halogen lamps; one or more light emitting diode lamps; one or more arc lamps, e.g. one or more carbon arc lamps; and/or one or more low pressure sodium lamps; and/or natural light provision systems, e.g. one or more devices for opening one or more shutters, blinds and/or curtains covering one or more windows or skylights.

The environment system 11 may include a ventilation system 11-4. The ventilation system 11-4 may include one or more apparatuses for ventilating at least one of the one or more areas of the building. For example, the ventilation system 11-14 may include any or any combination of: one or more air handling units; one or more inlet fans; and/or one or more exhaust ventilation systems, e.g. local exhaust ventilation; and/or one or more natural ventilation systems, e.g. one or more buoyancy ventilation systems and/or one or more wind ventilation systems.

The environment system may include an air quality improvement system 11-5. The air quality improvement system 11-5 may include one or more apparatuses for improving the air quality of at least one of the one or more areas of the building. The air quality improvement system 11-5 may include any or any combination of one or more air purifiers, one or more humidifiers, one or more dehumidifiers, and/or one or more air filters.

The environment system 11 may be all or any combination of a heating system, a cooling system, a ventilating system, and an air quality improvement system and/or may form part of a system performing all or any combination of these functions. For example, the environment system 11 may be able to provide all of heating, cooling and ventilation. The environment systems may further be able to improve air quality. Part or all of the environment system 11 may be a heating, ventilation and air cooling (HVAC) system.

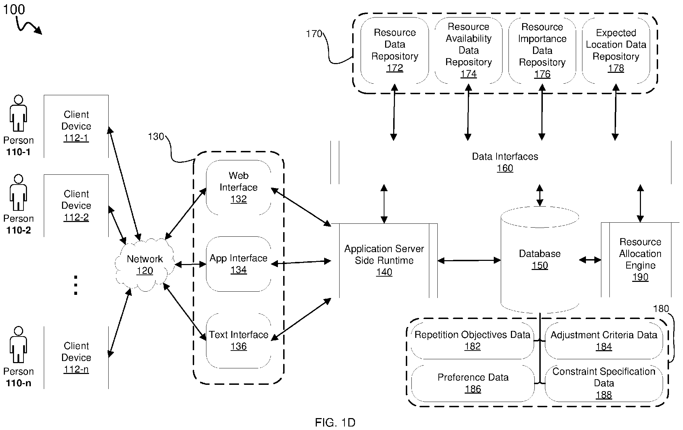

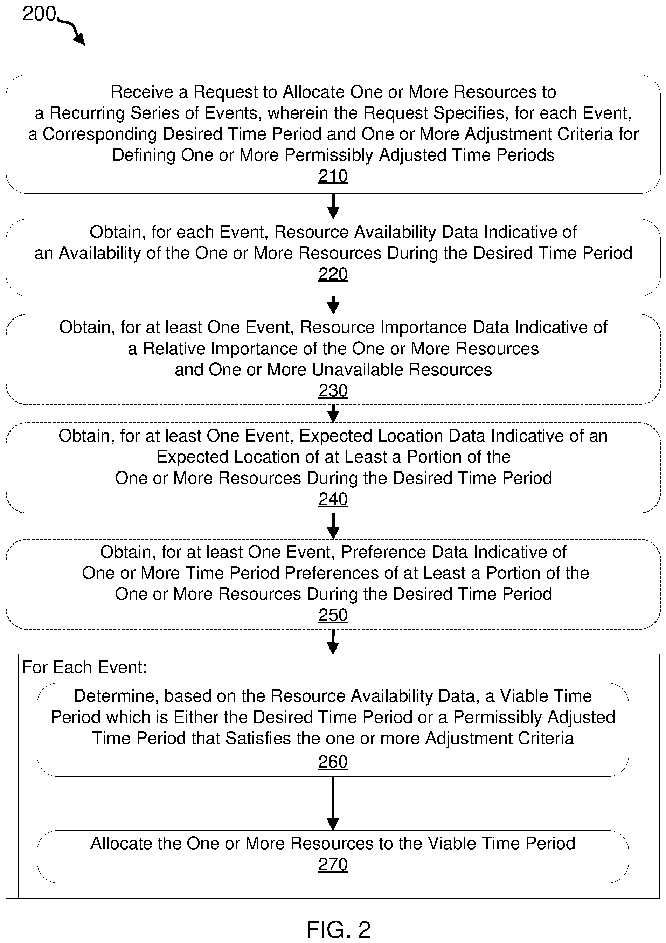

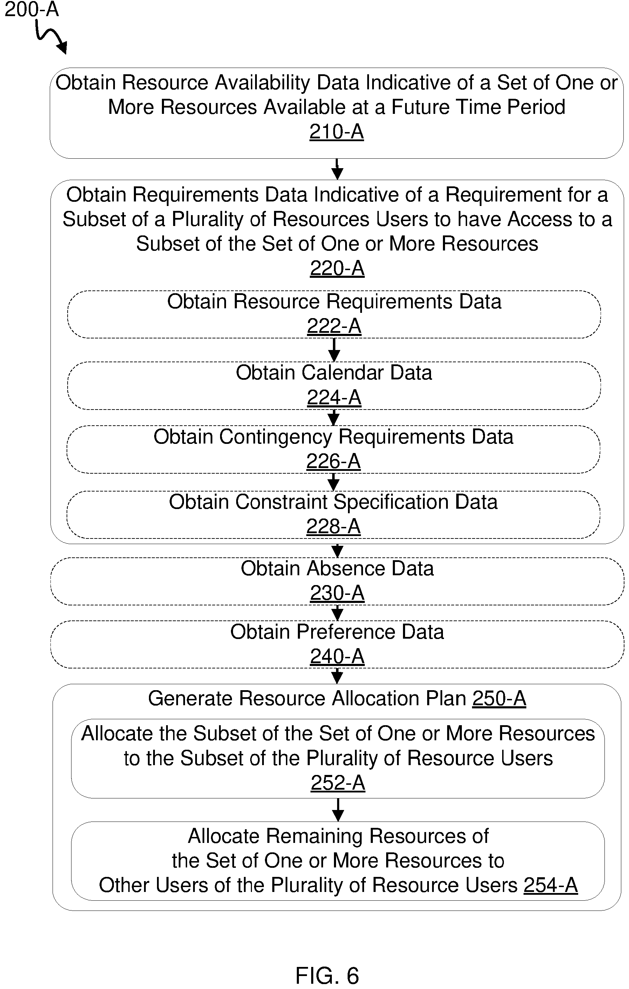

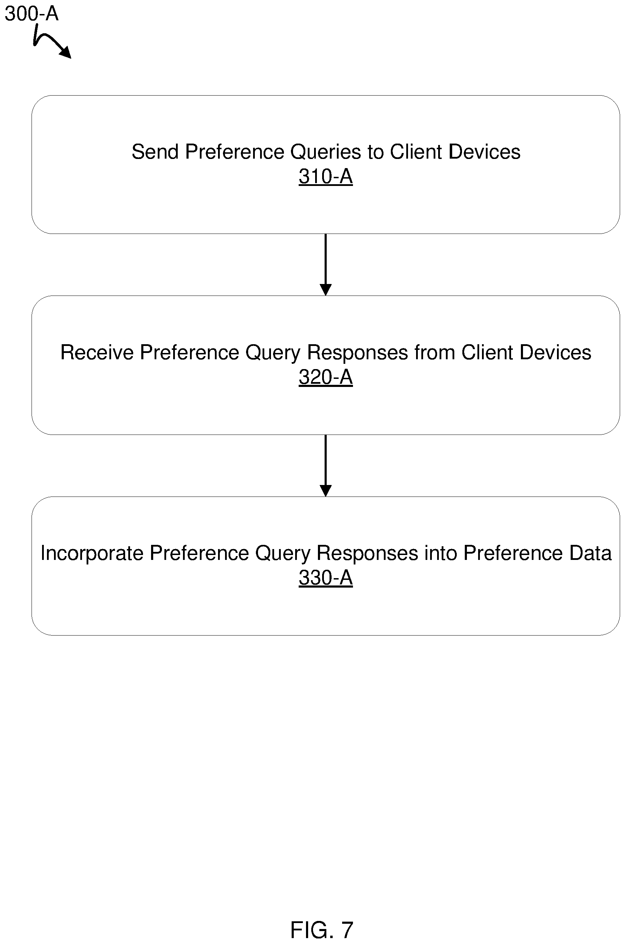

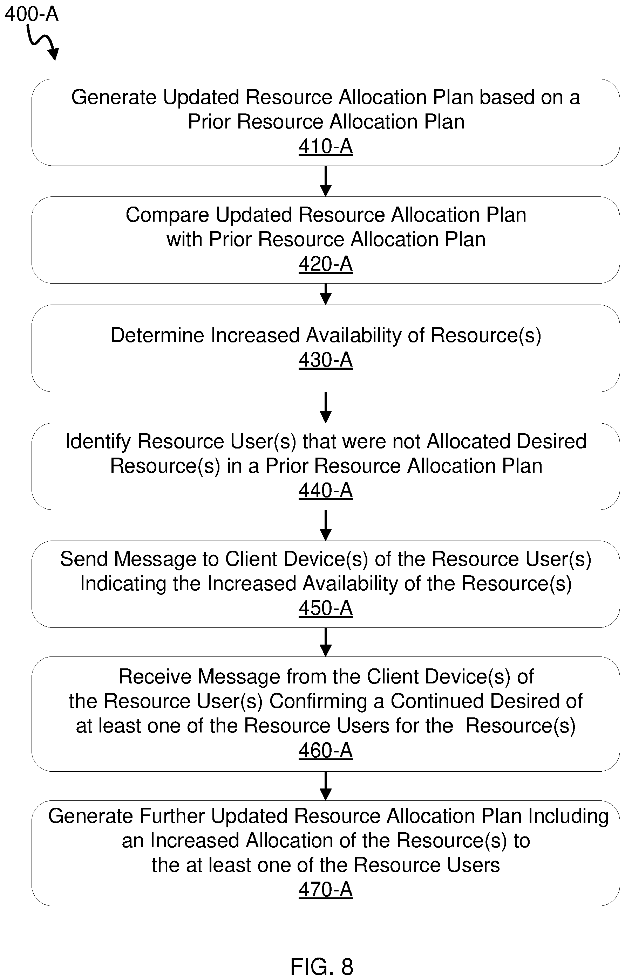

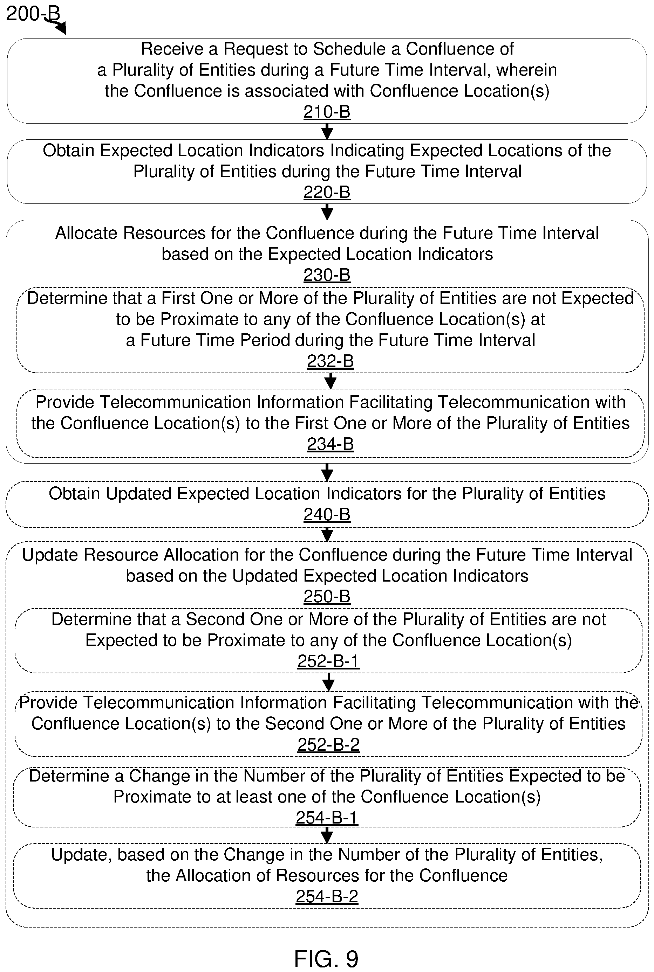

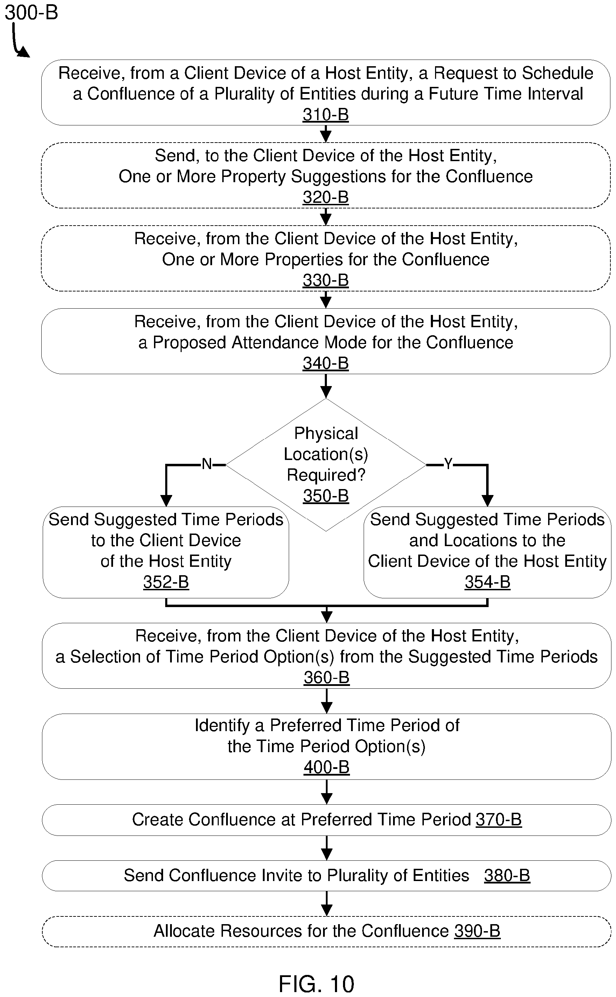

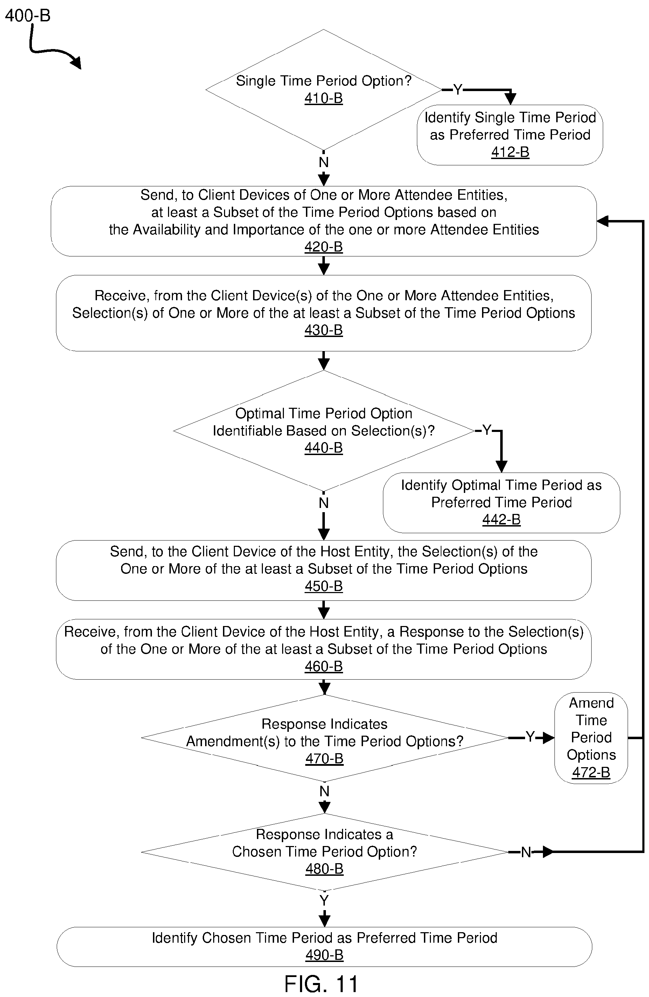

The system 1 may include a resource allocation system 12. The resource allocation system 12 may be configured to allocate one or more resources to one or more time periods. For example, the resource allocation system 12 may be the computer system 100 for allocating resources to a series of recurring events described with respect to Figure 1D and/or the resource allocation system 12 may be one or more components of the computer system 100, e.g. any or any combination of the application server side runtime 140, the database 150, the data interfaces 160, the resource data repositories 170, and/or the resource allocation engine 190 described with respect to Figure 1D. Alternatively or additionally, the resource allocation system 12 may include one or more computing devices configured to perform the example method 200 described in relation to Figure 2. Alternatively or additionally, the resource allocation system 12 may include one or more computing devices configured to perform the example method 200-A described in relation to Figure 6. The resource allocation system 12 may be further configured to perform either or both of the example method 300-A described in relation to Figure 7 and/or the example method 400-A described in relation to Figure 8. Alternatively or additionally, the resource allocation system 12 may include one or more computing devices configured to perform the example method 200-B described in relation to Figure 9, the example method 300-B described in relation to Figure 10 and/or the example method 400-B described in relation to Figure 11.

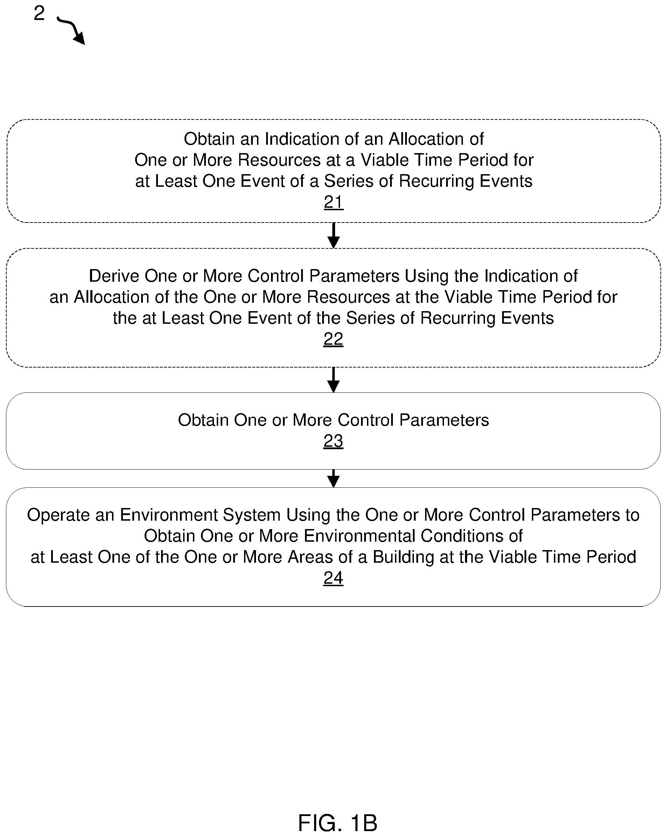

The system 1 may include a control system 13. The control system 13 may include one or more computing devices configured to perform an implementation of the example method 2 described in relation to Figure 1B.

The control system 13 may be configured to obtain an indication of an allocation of one or more resources. For example, the indication of the allocation of the one or more resources may be sent by the resource allocation system 12 to the control system 13 and received by the control system 13. As another example, the indication of the allocation of the one or more resources may be stored by the resource allocation system 12, e.g. to a database or another data store, and retrieved by the control system 13. The allocation of the one or more resources may be at a given time period.

The control system 13 may obtain an indication of the allocation of the one or more resources or another one or more resources another time period, e.g. a time period other than the given time period may be obtained.

The control system 13 may be configured to derive one or more control parameters using the obtained indication of the allocation of one or more resources.

Examples of control parameters include any or any combination of: a time at which a given environmental condition is to be achieved; a time period for which a given environmental condition is to be maintained; a time at which the environment system 11 or a component thereof is to be activated, e.g. initiated; an amount of time to continue operation of the environment system 11; a time at which to deactivate the environment system 11; an indication of one or more environmental conditions to be achieved in at least one of the one or more areas of the building; an indication of an expected occupancy of at least one of the or more areas of the building, e.g. a number of persons expected to be present in the at least one of the one or more areas of the building; an indication to activate the environment system 11; an indication to deactivate the environment system 11; an intensity at which to operate the environment system 11 or a component thereof; an amount of power to supply to the environment system 11 or a component thereof; and/or a speed at which to operate the environment system 11 or component thereof, e.g. a rotations per minute (RPM) value for a fan or turbine component of the environment system 11. A control parameter may be any parameter interpretable by the environment system 11. The environment system 11 may accept either or both of high-level control parameters and low-level control parameters. Examples of high-level control parameters include indications of one or more environmental conditions to be obtained, a time at which the one or more environmental conditions are to be obtained and an occupancy of at least one of the one or more areas of the building. Examples of low-level control parameters include indications to activate or deactivate the environment system 11 or a component thereof, an amount of power supply to the environment system or a component thereof; and/or a speed at which to operate the environment system or a component thereof. Where high-level control parameters are supplied to the environment system 11, the environment system 11 itself may derive one or more low-level control parameters for controlling its components.

The control system 13 may derive the one or more control parameters using the obtained indication of the allocation of the one or more resources using any suitable method.

For example, an expected occupancy of at least one of the one or more areas, e.g. a number of persons expected to be located proximate to the at least one of the one or more areas, at the viable time period may be derived based on the one or more resources including a location which is, is within, or is near the at least one of the one or more areas and one or more persons, with the expected occupancy being the number of the one or more persons. The location may be a room and the one or more persons may be persons in that room at the viable time period. An expected occupancy may also be derived where the one or more resources include equipment and/or workspaces that are used by one or more persons based on the amount of equipment and/or workspace allocated proximate to the at least one of the one or more areas of the building and an expected number of users of the equipment and/or workspace. For example, the one or more resources may include a plurality of desks which are each used by a person, and the expected occupancy may be derived as the number of the desks allocated proximate to the at least one of the one or more areas. As another example, the one or more resources may include one or more items of computer equipment that are each used by a person and the expected occupancy may be derived as the number of items of computer equipment allocated proximate to the at least one of the one or more areas.

A time period at which a given environmental condition is to be achieved may be derived as or based on the viable time period at which the one or more resources are allocated. The time period may include an amount of time prior to and/or after the viable time period. For example, the amount of time may include an arrival and/or departure interval to account for the time that people may arrive early for an allocation and/or the time by which an allocation may overrun.

A time period at which the environment system 11 or a component thereof is to be activated may be derived using the viable time period such that one or more desired environmental conditions may be obtained at the viable time period. Methods by which this can be achieved are described below in relation to the operation of the environment system 11 by the control system 13. Similar methods may be used to determine a time to deactivate the environment system 11 or a component thereof.

The one or more environmental conditions to be achieved in at least one of the one or more areas of the building may be pre-specified, e.g. a pre-specified temperature, air quality or lighting amount. The one or more environmental conditions to be achieved may be derived based on an expected occupancy. For example, a desired initial temperature at the start of the viable time period may be lower where a greater number of persons are expected to be proximate to the at least one of the one or more areas of the building as the at least one of the temperature of the at least one of the one or more areas will quickly rise due to the body heat of the persons. As another example, a desired initial carbon dioxide level at the start of the viable time period may be lower where a greater number of persons are expected to be proximate to the at least one of the one or more areas of the building as the carbon dioxide level will quickly rise due to the breathing of the persons.

Low-level control parameters may be derived using one or more sensors connected to or forming part of either or both of the control system 13 and/or the environment system 11. For example, the one or more sensors may include a temperature sensor and an indication to activate or deactivate a heating or cooling system may be based on this. For example, an indication to activate a heating system may be derived based on the temperature being below a specified temperature and an indication that the specified temperature is to be achieved at the viable time period.

The control parameters may be derived additionally using an indication of an allocation of one or more resources or another one or more resources at another time period, e.g. where the control system 12 is configured to obtain such an indication. Deriving the control parameters additionally using this indication may include deriving one or more control parameters resulting in maintaining operation of the environment system 11 or one or more components thereof, e.g. instead of activating and deactivating the environment system 11 or the one or more components thereof. For example, one or more lamps of a lighting system 11-3 may remain switched on, the heating system 11-1 may remain active and/or the cooling system 11-2 may remain active. Where the interval between the time period and the another time period is sufficiently short, maintaining operation of the environment system 11 or the one or more components thereof may use less energy than deactivation and reactivation of the environment system 11 or the one or more components thereof.

The control system 13 may be configured to obtain one or more control parameters. The one or more control parameters may be or include the one or more derived control parameters. The one or more control parameters may be or include one or more control parameters received from a control interface 14.

The control system 13 may be configured to operate the environment system 11 using the one or more control parameters to obtain one or more environmental conditions of at least one of the one or more areas of a building. Operating the environment system 11 using the one or more control parameters may include activating, deactivating and/or continuing operation of the environment system and/or components thereof. Operating the environment system 11 using the one or more control parameters may include adjusting an intensity of operation of the environment system 11 or one or more components thereof, e.g. increasing the speed of one or more fan and/or turbine components of the environment system 11, the brightness of one or more lighting components of the lighting system 11-1; and/or the power supplied to the environment system 11 or one or more components thereof.

The one or more environmental conditions may be obtained at a given time and/or given time period. The control system may be configured to obtain the one or more environmental conditions at this given time or given time period. The control system may initiate operation of the environment system 11 or a component thereof at a specified time prior to the given time or time period to obtain the one or more environmental conditions at the given time or time period. The length of the time interval between the specified and the given time or between the specified time and the start of the given time period may be based on an amount of time required to obtain the one or more environmental conditions using the environment system 11. For example, where the one or more environmental conditions include a specified temperature, the amount of time may be the amount of time for a heating system and/or a cooling system to heat and/or cool the at least one of the one or more areas of the building to the specified temperature. The amount of time for the heating system and/or the cooling system to heat and/or cool the at least one of the one or more areas of the building to the specified temperature may be based on one or more heating and/or cooling curves. As another example, the one or more environmental conditions may include a specified maximum carbon dioxide level, and the amount of time may be the amount of time for a ventilation system to ventilate the at least one of the one or more areas of the building such that its carbon dioxide level is at or below the specified carbon dioxide level. The amount of time required to obtain the one or more environmental conditions may depend on an occupancy of the at least one of the one or more areas of the building at the given time or time period. For example, because people emit heat, the amount of time required to obtain a given temperature may depend on a number of persons located proximate to, e.g. within or near, the at least one of the one or more areas of the building at the given time or time period.

The system 1 may include a control interface 14. The control interface 1 may be configured to obtain an indication of an allocation of one or more resources. For example, the indication of the allocation of the one or more resources may be sent by the resource allocation system 12 to the control interface 14 and received by the control interface 14. As another example, the indication of the allocation of the one or more resources may be stored by the resource allocation system 12, e.g. to a database or another data store, and retrieved by the control interface 14.

The control interface 14 may be configured to derive one or more control parameters using the obtained indication of the allocation of the one or more resources. The one or more control parameters may be of any of the types described in relation to control system 13. The one or more control parameters may be derived using any of the methods

The control interface 14 may be configured to send the one or more control parameters to the control system 13. The one or more control parameters may be of any or any combination of the types of control parameters previously described. The control interface 14 may send the one or more control parameters to the control system using one or more interfaces supported by the control system 13, e.g. one or more APIs for the control system 13.

### Building Environment Regulation Method

Figure 1B shows an example method for regulating an environment of one or more areas of a building.

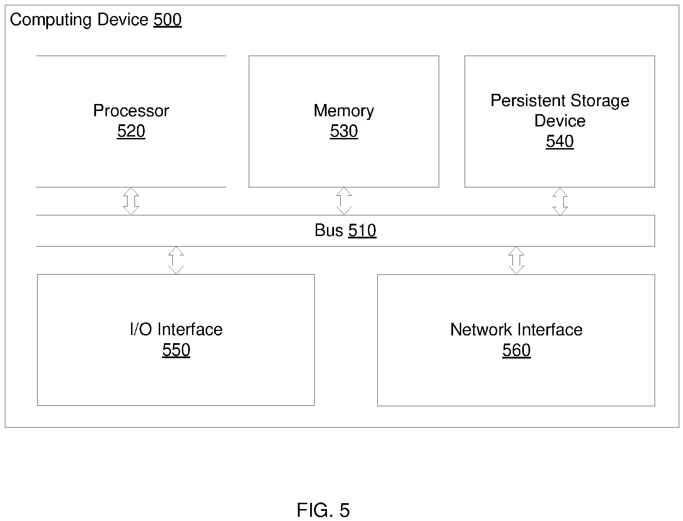

The example method may be implemented as one or more computer-executable instructions executed on one or more computing devices, e.g. the computing device 500 described in relation to Figure 5. The example method may be performed by the control system 13 described in relation to Figure 1A. Optional steps are indicated via dashed lines.

At optional step 21, an indication of an allocation of one or more resources at a viable time period for at least one event of a series of recurring events is obtained.

At optional step 22, one or more control parameters are derived using the indication of the allocation of one or more resources at the viable time period for the at least one event of the series of recurring events. The one or more control parameters may be derived in any of the manners described in relation to the control system 13.

At step 23, one or more control parameters are obtained. The one or more control parameters are based on an indication of an allocation of one or more resources at a viable time period for at least one event of a series of recurring events. For example, the one or more control parameters may have been derived using the indication of the allocation. The viable time period is a desired time period for the at least one event or a permissibly adjusted time period for the at least one event satisfying one or more adjustment criteria. At least one of the one or more resources is proximate to at least one of the one or more areas of the building. The one or more control parameters may be or include any of the control parameters described in relation to control system 13.

At step 24, the environment system is operated using the one or more control parameters to obtain one or more environmental conditions of the at least one of the one or more areas of the building at the viable time period. The environment system may be operated in any of the manners described in relation to control system 13.

### Interfacing Method

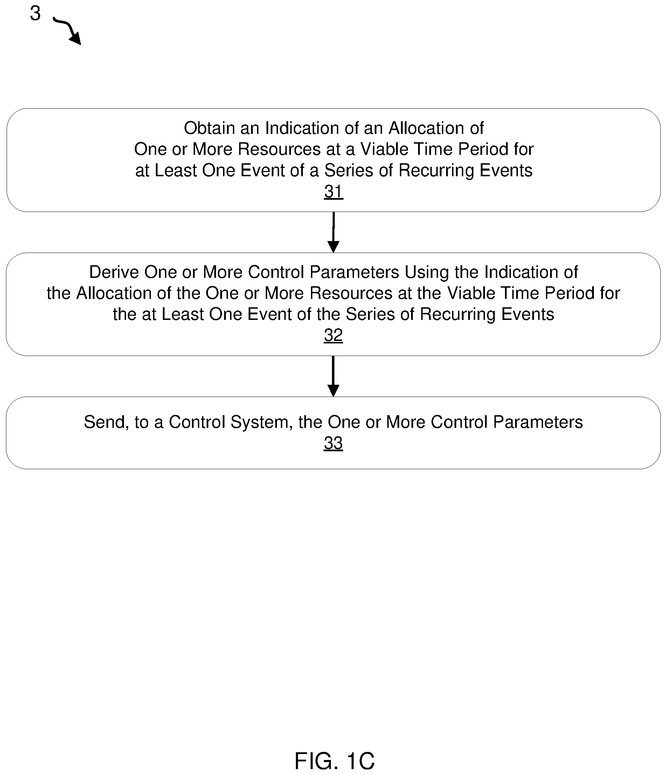

Figure 1C shows an example method 3 for interfacing with a control system.

The example method 3 may be implemented as one or more computer-executable instructions executed on one or more computing devices, e.g. the computing device 500 described in relation to Figure 5. The example method may be performed by the control interface 14 described in relation to Figure 1A.

At step 31, an indication of an allocation of one or more resources at a viable time period for at least one event of a series of recurring events is obtained. This step may be performed in any of the ways described in relation to step 21 of the example method 2 of Fig. 1B.

At step 32, one or more control parameters are derived using the indication of the allocation of one or more resources at the viable time period. This step may be performed in any of the ways described in relation to step 21 of the example method 2 of Fig. 1B.

At step 33, the one or more control parameters are sent to a control system. The one or more control parameters to the control system using one or more interfaces supported by the control system, e.g. one or more APIs for the control system.

### Resource Allocation System

Figure 1D shows a schematic detailing a computer system 100 for allocating resources to a series of recurring events in accordance with an embodiment. The computer system 100 is configured to allocate resources for instances of the series of recurring events based on resource availability data.

The computer system 100 includes client devices 112 used by respective persons 110. The client devices 112 may be any suitable computing devices, e.g. smartphones, tablet computers, laptop computers, desktop computers, feature phones, and/or any other computing device configured to communicate with network 120.

At least one of the client devices 112 may be utilizable by a respective person 110 to request the allocation of resources to a series of recurring events. The request may be sent by the client device 112 via the network 120. The request may be sent using any suitable mechanism and/or in any suitable form, e.g. as an application programming interface (API) call, a web service request (e.g. a representational state transfer (REST) request), an email or a messaging service message. The respective person 110 may input the request through one or more applications using which the request may be sent, e.g. a web browser application shown a request input web page, a messaging application through which resource request messages may be sent, and/or a native application through which requests may be sent.

The request may specify one or more resources that are required for each of or each of a subset of the series of recurring events, and may also specify one or more resources that are desired for each of or each of a subset of the series of recurring events. The request may specify, for each event of the series of recurring events, a corresponding desired time period at which to allocate the one or more required resources and, if possible, at least some of the desired one or more resources.

A first time period for a first event in the series may be within a given interval but need not have a specified start and/or end time. Alternatively, the desired start and end of the desired time period may be specified, (e.g. a request to allocate resources for 10am to 11am on Thursday 19 June 2020). One or more of the corresponding desired time periods for the subsequent events in the series of recurring may be based on the first time period and/or defined relative to the first time period rather than being explicitly defined in the request.

The corresponding desired time periods for each of the series of recurring events may be specified by one or more repetition objectives, which may specify the pattern of the desired time periods and/or the relationship between each of the desired time periods. In addition, the request may specify one or more adjustment criteria, which define one or more permissibly adjusted time periods for each of the desired time periods.

The repetition objectives may include, but are not limited to, one or more of a recurrence definition, a periodicity, definition, a day reference definition and/or a named day definition. A recurrence definition may specify that the desired time period should recur at a given time period frequency, e.g. daily, weekly or monthly. A periodicity definition may specify that the desired time period should recur at given intervals, e.g. every X days, Y weeks or Z months, where X, Y and Z are positive integers. A day reference definition may specify that the desired time period should recur one or more given numbered days or working days relative to the start or end of an interval, e.g. a month or a year. For example, a day reference definition may specify that the desired time period should recur on: the 5^{th} day of the month; the 2^{nd} last working day of the month; or the 5^{th} last working day of the year. The day reference definition may specify that the desired time period should recur on a plurality of numbered days or working days. For example, a day reference definition may specify that the desired time period should recur on the 4^{th} day of the month, the 15^{th} day of the month and the 2^{nd} last day of the month. A named day definition may specify that the desired time period should recur on a given named day of the week, e.g. on a Monday or on a Friday. A plurality of repetition objectives may be combined. For example, a day reference definition and a named day definition may be combined to define a combined repetition objective indicating that the event should occur on a named day closest to the numbered day, e.g. that the desired time period should recur on the Tuesday closest to the 6^{th} day of the month.

The adjustment criteria define rules for setting an alternative time period to the desired time period. Generally, the system will aim to set a viable time period that has the same length as the desired time period and that maximizes the amount of resources that can be allocated to the event whilst still satisfying the adjustment criteria. For instance, when scheduling a series of confluences, each instance will be adjusted based on the adjustment criteria to maximize the number of attendees.

The adjustment criteria may include, but are not limited to, one or more of a time range; a date range; a time flexibility parameter; a date flexibility parameter; one or more time alternatives; and/or one or more alternatives.

A time range defines a start time and end time within which the time period can be permissibly adjusted. For example, the desired time period may be 10am-11am, the time range may be 10am-3pm, and the permissibly adjusted time period may be any one hour time period within this range.

A date range defines a start date and end date within which the date of the time period can be permissibly adjusted. For example, the desired time period may be 10am-11am on 5^{th} May, the date range may be 3^{rd} May - 7^{th} May, and the permissibly adjusted time period may be 10am-11am on any of the 3^{rd}, 4^{th,} 6^{th}, or 7^{th} May.

A time flexibility parameter defines an amount of time by which the desired time period may be adjusted. For example, the desired time period may be 1pm-1:30pm, the time flexibility parameter may be 1.5 hours, and the permissibly adjusted time periods may be an adjustment of the desired time period by up to an hour and a half, e.g. any 30 minute time period starting at a time between 11:30am and 2:00pm.

A date flexibility parameter defines a number of days or working days by which the date of the desired time period may be adjusted. For example, the desired time period may be 3pm-4pm on 15^{th} July, the date flexibility parameter may be 2 days, and the permissibly adjusted time period may be 3pm-4pm on any of the 13^{th}, 14^{th}, 16^{th} or 17^{th} July. As another example, the desired time period may be 1pm-3pm on Friday 19^{th} June 2020, the date flexibility parameter may be 2 working days, and the permissibly adjusted time period may be 1pm-3pm on any of 17^{th}, 18^{th}, 22^{nd} or 23^{rd} June 2020, as the 20^{th} and 21^{st} June 2020 are non-working days.

One or more time alternatives define one or more different time periods to which the time period may be permissibly adjusted. For example, the desired time period may be 1pm-2pm, the one or more time alternatives may be 9am-10am and 5pm-6pm, and the permissibly adjusted time period may be either of these times.

One or more date alternatives define one or more different date to which the date of the desired time period may be permissibly adjusted. For example, the desired time period may be 8am-9am on 16^{th} September, the one or more date alternatives may be 11^{th} September, and the permissibly adjusted time period may be 8am-9am on 11^{th} September.

A plurality of adjustment criteria may be combined. For example, a date range and a time flexibility parameter may be combined. As an example, the desired time period may be 4pm-5pm on 3^{rd} October, the date range may be 1^{st}-4^{th} October, and the time flexibility parameter may be two hours. Therefore, the permissibly adjusted time period may be any one hour time period starting between 2pm and 6pm on any of the 1^{st}, 2^{nd}, 3^{rd} or 4^{th} October other than the desired time period.

The adjustment criteria may include one or more adjustment constraints specifying limitations to the permissible adjustments to the desired time period. For example, the adjustment criteria may also include one or more other adjustment criteria defining a broad range of times and/or dates to which the time period may be permissibly adjusted, but there are exceptions to this broad range which are defined by the adjustment constraints.

The adjustment constraints may include, but are not limited to, one or more of an exclusion indicator and/or a repetition restriction.

An exclusion indicator specifies one or more time periods excluded from the one or more permissibly adjusted time periods. An exclusion indicator may be a time exclusion range; or a date exclusion range. A time exclusion range specifies one or more time intervals within which a permissibly adjusted time period cannot fall, e.g. the desired time period may be an hour long, and a time exclusion range may be 12:30pm to 1:30pm so the time period cannot be permissibly adjusted to any time period which falls even partly within this range, e.g. the time period cannot be permissibly adjusted to 1:15pm to 2:15pm. A date exclusion range specifies particular dates which the time period cannot be permissibly adjusted to fall on, e.g. another adjustment criteria may be a date range covering December 1^{st}-31^{st} and the date exclusion range may exclude a range of dates within this period corresponding to public holidays, e.g. 25^{th}-26^{th} December.

A repetition restriction specifies a minimum time interval between the one or more permissibly adjusted time periods and a previous time period at which an instance of the event has occurred or is scheduled to occur. For example, a date range or date flexibility parameter adjustment criteria may indicate that the time period may be permissibly adjusted to any working day of a given week, but the repetition restriction may exclude dates which are less than a week from the previous time period at which an instance of the event has occurred or is scheduled to occur.

One or more of the client device(s) 112 may include one or more applications configured to receive one or more permissibly adjusted time period options via the network 120, presenting these one or more permissibly adjusted time period options to the respective person 110, and, in response to presenting these permissibly adjusted time period options, send one or more indications of time periods preferred by the person via the network 120. These one or more applications may include a messaging or email application displaying a received message or email including the one or more permissibly time period options and providing functionality to reply to the message with a message indicating the one or more preferred time periods. These one or more applications may include a web browser application showing received web content that includes the one or more permissibly adjusted time period options and web user interface elements for inputting the one or more preferred time periods. These one or more applications may include a native application (e.g. an app) presenting the permissibly adjusted time period options, which may have been received using a web service, and user interaction aspects for indicating the one or more preferred time periods. The presentation of the one or more permissibly adjusted time period options may be visual, e.g. displaying the one or more permissibly adjusted time period options on a display integral to or connected to the respective client device 112, or may be audible, e.g. audio output including a synthesized voice speaking the one or more permissibly time period options. The indication of the one or more preferred time periods may be a selection of one or more of the permissibly adjusted time period options or may be an indication of another one or more preferred time periods. The another one or more preferred time periods may be another one or more permissibly adjusted time periods which were not included in the one or more permissibly adjusted time period options or may be a time period that is not a permissibly adjusted time period. Where the another one or more time periods are not permissibly adjusted time periods, the client application may provide feedback to the person indicating this.

The computer system includes the network 120 to which the client devices 112 are connected. The network 120 may be any suitable network over which data may be communicated. For example, the network 120 may be any interface over which data may be transferred from the one or more applications to one or more interfaces 130. For example, the network 120 may be any of or any combination of a local area network (LAN), a wireless local area network (WLAN), a wide area network (WAN), a cellular network (e.g. a GSM, 3G, 4G, 5G or CDMA network), an Intranet or the Internet.

The computer system 100 also includes the one or more interfaces 130. The one or more interfaces 130 are configured to act as gateways between messages and/or requests received from the client devices 112, over the network 120, and an application server side runtime 140. The one or more interfaces 130 may be one or more computer programs implemented on a single computing device or over a plurality of computing devices. For example, each of the one or more interfaces may be implemented as individual computer programs and each of the individual computer programs may be hosted on a different computing device, or the one or more interfaces may be implemented as a single computer program hosted on a single computing device. The one or more interfaces may also be separate to, but in communication with, the application server side runtime 140 or may be components of the application server side runtime 140.

The one or more interfaces may include a web interface 132. The web interface may provide functionality of the application server side runtime 140 to the client devices via one or more web pages and/or as a web application. The web interface 132 may receive one or more web protocol requests (e.g. HTTP requests) from a browser application on one of the client devices 112 indicating a request to allocate resources to a series of recurring events. In response to these web protocol requests, the web interface 132 may input this resource-allocation request or a transformation thereof to the application server side runtime 140. In response to the resource-allocation request or the transformation thereof, the application server side runtime 140 may send one or more messages indicative of permissibly adjusted time period options to the web interface 132. Then, the web interface 132 may send web content (e.g. HTML content) and/or web data (e.g. REST data) including these permissibly adjusted time period options to one or more of the client devices 112. The web interface 132 may receive one or more web protocol messages (e.g. HTTP messages) from at least one of the one or more of the client devices 112 indicating one or more preferred time periods, which may be a selection of one or of the one or more permissibly adjusted time period options, and the web interface 132 may input this indication to the application server side runtime 140. Further resource-allocation functionality of the application server side runtime 140 may be provided to the client devices via the web interface 132 using similar mechanisms.

The one or more interfaces 130 may include an app interface 134. The app interface 134 may provide functionality of the application server side runtime 140 to the client devices 112 via one or more services utilisable by native application(s) on the client devices 112. The app interface 134 may receive one or more service requests (e.g. application programming interface (API) requests, representational state transfer (REST) API requests, or Simple Object Access Protocol (SOAP) requests) from a native application on one of the client devices indicating a request to allocate resources to a series of recurring events. In response to these service requests, the app interface 134 may input this resource-allocation request or a transformation thereof to the application server side runtime 140. In response to the resource-allocation request or the transformation thereof, the application server side runtime 140 may send one or more messages indicative of one or more permissibly adjusted time period options to the app interface 134. Then, the app interface 134 may send one or more service requests indicating these permissibly adjusted time period options to one or more of the client devices 112 for use by the native application. The app interface 134 may receive one or more service requests at least one of the one or more client devices 112 indicating one or more preferred time periods, which may be a selection of one or of the one or more permissibly adjusted time period options, and the app interface 134 may input this indication to the application server side runtime. Further resource-allocation functionality of the application server side runtime 140 may be provided to the client devices via the app interface 134 using similar mechanisms.

The one or more interfaces 130 may include a text interface 136. The text interface 136 may provide functionality of the application server side runtime 140 to the client devices 112 via messages communicated between the text interface 136 and the client devices 112. The text interface 136 may receive one or more messages (e.g. short message service (SMS) messages, rich communication service (RCS) messages, messaging app messages, social network messages) from one of the client devices 112 where the one or more messages include a request to allocate resources to a series of recurring events. In response to these one or more messages, the text interface 136 may input a resource-allocation request based on the request in the one or more messages to the application server side runtime 140. In response to the resource-allocation requests the application server side runtime 140 may send one or more messages indicative of permissibly adjusted time period options to the text interface 136. Then, the text interface 136 may send one or more messages including the permissibly adjusted time period options to one or more of the client devices. The text interface 136 may receive one or more messages from at least one of the one or more client devices indicating a indicating one or more preferred time periods, which may be a selection of one or of the one or more permissibly adjusted time period options, and the text interface 136 may input this indication to the application server side runtime 140. Further resource-allocation functionality of the application server side runtime 140 may be provided to the client devices 112 via the text interface 136 using similar mechanisms.

The computer system 100 includes the application server side runtime 140. The application server side runtime 140 may be a computer program, or multiple computer programs, implemented on a single computing device or over a plurality of computing devices. The application server side runtime 140 provides resource-allocation functionality. For example, the application server side runtime 140 may access a resource allocation plan, and provide the resource allocation plan or a part thereof to one or more interfaces in response to requests from one of the interfaces 130, e.g. in response to a request (e.g. an API call and/or service request) from one of the interfaces 130. The resource allocation plan may include allocations of resources to time periods for one or more series of recurring events, and the resource allocation plan may be stored in a database 150 and/or accessible through data interfaces 160. As another example, the application server side runtime 140 may receive a request from one of the interfaces 130 to allocate one or more resources to a series of recurring events. In response to the request, the application server side runtime 140 may communicate with the database 150, the data interfaces 160 and/or a resource allocation engine 190 (either directly or indirectly via the database) to allocate the one or more resources to the series of recurring events.

The computer system 100 includes the database 150. The data stored in the database 150 includes resource allocation information, e.g. a resource allocation plan. The database 150 provides data storage and access functionality, e.g. functionality whereby data can be written to and read from the database 150. The database 150 may also facilitate the deletion of data from the database. The database 150 may be any combination of software and hardware capable of providing this functionality. For example, the database software may be: a relational database server, e.g. a Standard Query Language (SQL) database server; a NoSQL database server, e.g. a key-value store server, a column store server, a document store server or a graph database server; or a file storage server, e.g. a file transfer protocol. The hardware on which the database software is implemented may be one or more suitable computing devices, e.g. one or more server computing devices and/or one or more computing devices of a cloud computing system.

The database 150 is configured to interact with the application server side runtime such that the application server side runtime 140 may read data from and write data to the database 150. The database 150 may communicate with, e.g. receive data to be written from and provide data to be read to, the application server side runtime 140 over a network of any of the types previously mentioned. The database 150 may communicate using a database specific communication technology, e.g. a database specific protocol, or a widely applicable communication technology, e.g. SOAP or REST service calls. Alternatively or additionally, the database 150 may communicate with the application server side runtime 140 using API calls, interprocess communication and/or shared storage. The aforementioned communication technologies may be particularly applicable when the database 150 and the application server side runtime 140 are hosted on the same computing device.

The computer system 100 also includes one or more data interfaces 160. The one or more data interfaces 160 are configured to load data from one or more data repositories 170 into the database 150. The one or more data interfaces 160 may also synchronise changes to the corresponding data loaded into the database 150, e.g. updates to the database by the application server side runtime 140, back to the data repositories. The one or more data interfaces 160 may be one or more computer programs implemented on a single computing device or over a plurality of computing devices. For example, each of the one or more interfaces may be implemented as individual computer programs and each of the individual computer programs may be hosted on a different computing device, or the one or more interfaces may be implemented as a single computer program hosted on a single computing device.

Each of the one or more data repositories 170 may be part of the computer system 100 or external to the computer system 100. Each of the data repositories 170 may be implemented using any hardware and/or software combination using which the relevant data can be loaded and provided to the one or more data interfaces. For example, each of the data repositories 170 may be or include a database; flat file storage; application specific data stores; and/or applications for dynamic data generation and/or transformation. Furthermore, in an alternative embodiment, the data repositories 170 are integrated within the database 150 itself. In this case, there may be no need for the data interface 160.

The one or more data repositories may include a resource data repository 172. The resource data repository includes information about one or more resources. For example, the resource data repository 172 may include properties of each of the one or more resources.

The one or more resources may include, for example: human resources, e.g. persons such as staff, contractors, external partners and clients; event locations, e.g. confluence locations, such as meeting room, and/or conference locations, such as a convention center or assembly hall; specialized equipment that may be only used by one person at a time, such as a 3D printer or motion capture device; computing devices, e.g. desktop, laptop and tablet computers; data storage, e.g. the amount of data storage available on one or more file storage servers at one or more locations; network capacity, e.g. the amount of network bandwidth available in a local area network and/or a shared internet connection; equipment, e.g. printers, telecommunication equipment or video conferencing equipment; workspace such as laboratory space or office space, e.g. in terms of physical space or other workspace resources, such as desks; and/or gymnasium space and equipment.

Examples of properties of these resources that may be included in the resource data repository information 172 follow. For human resources, the properties of a person may include a name of the person; a role of the person; an organization of the person; a department of the person; and a seniority of the person. For event locations, the properties of an event location may include: a geographic location, e.g. the address of the event location; a building location, e.g. which floor and/or section of a building, such as an office, the event location is on; a name, e.g. the name of a meeting room; a capacity, e.g. a maximum number of persons that can be accommodated in the event location; a size, e.g. the dimensions and/or area of the event location; lighting, e.g. an indication of an amount of natural light available at the event location; décor, e.g. an indication as to whether the event location is sufficiently well decorated to host events involving external persons; and/or fixed equipment at the event location, e.g. whether the event location has a projector, a sound system, videoconferencing equipment, tables, seating, and/or a whiteboard. For specialized equipment, the properties of the resources may include the model of the specialized equipment and its suitability for particular tasks, e.g. for a 3D printer, the materials with which it can be used and the maximum print size. For data storage, the properties of the data storage may include a data access bandwidth and latency, and a data storage type, such as whether it is persistent or temporary storage. For a computing device, the properties of the computing device may include the processing power, the memory available, the operating system and the software installed. For network capacity, the properties of the network capacity may include the latency of the network or a part thereof; the type of the network capacity, such as whether it is wired or wireless network capacity; the location of the network capacity, and/or security of the network capacity. For equipment, the equipment properties may include the type of the equipment, the model of the equipment, and/or technical specifications of the equipment, e.g. the number of pages per minute that a printer can print or the video quality (e.g. resolution) of video conferencing equipment. For workspace, the properties may include the type of workspace, the size of the workspace, equipment located in or otherwise associated with the workspace, and the number of people that may simultaneously use the workspace. For workspace resources, such as desks, the properties may include: a number of desks, any associated equipment (in general or for each desk), e.g. whether a phone, video conferencing equipment, multiple monitor setup, and/or a laptop dock is available; size and/or dimensions; and/or whether the desk/workspace is sound isolated. For gymnasium equipment, the properties may include the type of gymnasium equipment; muscle groups associated with gymnasium equipment; a weight of the gymnasium equipment; and a size of the gymnasium equipment.

The one or more data repositories 170 may include a resource availability data repository 174. The resource availability data repository 174 includes resource availability data for one or more resources. Resource availability data may include, but is not limited to, times when each of the one or more resources are available; the amounts of a particular resource of the one or more resources that are available; and/or the amount of resources of a given type that are available, e.g. how many computing devices are available.

For human resources, the availability data repository 174 may include person-specific availability data for one or more persons of the one or more resources. The person-specific availability data may be sourced from calendars of the one or more persons, e.g. from calendar data of a calendar application. The person-specific availability data may alternatively or additionally be sourced from a human resources (HR) system designating absence data indicating that at least one of the one or more persons is not expected in be available at a given time (e.g. because of annual leave absence, sickness absence, non-working days (e.g. for part-time workers) and/or public holidays). The person-specific availability data may alternatively or additionally be sourced by processing emails of at least some of the one or more persons, with their consent, to determine time periods when they are not expected to be available which have not been included in their calendars. The person-specific availability data may include data for future time periods such that future events may be scheduled for when persons are available based on their stated or inferred future availability. The person-specific availability data may also include historic data indicating when given persons were available or not available in the past. Such historic data may be used to infer when persons are likely to be available or not during future time periods. For example, a person may have been unavailable at a given time period on a given day on most weeks for the past year but may not have included this in their calendar for the coming week. However, it is reasonably likely that this may be an oversight by the person, and the persons will, in fact, also be unavailable this week, so scheduling events including the person at the given time period on the given day should still be avoided.

For human resources, the availability data repository 174 may include generic availability data indicating when all, most or a group of the one or more are unavailable. For example, the generic availability data may include data indicating that all persons except for a skeleton group of persons will not be available on a given day, e.g. because of a public holiday, an emergency, an information systems outage or government-mandated closure. As another example, the generic availability data may include data indicating that a group of persons are unavailable over a designated lunch break period for that group of persons. The generic availability data may also include data indicating that persons will be available within certain working hours except for conflicts and variations. Generic availability data may be sourced from a facilities management system, a human resources system and/or a calendar system.

The one or more data repositories 170 may include a resource importance data repository 176. The resource importance data repository 176 includes indications of the importance of one or more resources. The importance of each of the one or more resources may indicate the relative importance of each resource to events. The importance may include a general importance and/or one or more specific importances. The general importance may indicate an overall importance of a resource compared to other resources. Each of the one or more specific importances may indicate the importance of a resource for a particular series of recurring events compared to other resources to be allocated for that particular series of recurring events; and/or the one or more specific importances may indicate the importance of a resource compared to other resources for a particular type of a series of recurring events.

The one or more data repositories 170 may include an expected location data repository 178. The expected location data repository 178 may include expected location data for at least a portion of the one or more resources, e.g. movable resources of the one or more resources. The expected location data may indicate the expected location of the at least a portion of the one or more resources over one or more future time periods. The expected location data may be sourced from one or more resource management systems, e.g. an enterprise resource planning system. Expected location data for non-human resources may be sourced from the one or more resource management systems. Expected location data for human resources may be sourced from other systems.

For human resources, the expected location data repository 178 may include person-specific expected location data for one or more persons of the one or more resources. The person-specific location data may be sourced from calendars of the one or more person, e.g. from calendar data of a calendar application, which may indicate where the person is planning to be, e.g. at home or in the office, at one or more time periods. The person-specific expected location data may alternatively or additionally be sourced from a human resources (HR) system designating days of the week where it has been agreed that the person will be in the office. The person-specific expected location data may alternatively or additionally be sourced by processing email of certain persons, with the persons' consent, to determine where the location of the person where this may not be available or may differ from what is included in the calendar data. The person-specific expected location data may include data for future time periods such that it can be determined whether a person is expected to attend events in-person or remotely.

The person-specific expected location data may also include historic data indicating where given persons were in the past. Such historic data may be used to infer where persons are likely to be during future time periods. For example, a person may have been at a given location on a given day of the week for most weeks of the year but may have not indicated this in their calendar for the coming week. However, it is reasonably likely that this may be an oversight by the person, and the person will, in fact be at the given location on the given day of the week. In addition to one or more of the data sources previously indicated, the historic data may include location tracker data indicating the past location of persons which has been collected with the persons' consent. The persons may also limit when such location tracker data may be collected and the granularity of this location tracker data, e.g. a person may indicate that location tracker data can only be collected on working days and only to the nearest kilometre. The location tracker data may be collected using devices including a global positioning system (GPS) receiver component carried by persons, such as the persons' smartphones. The location tracker data may be used to determine whether, at given times and days of the week in the past, the person was at a given location and when they are likely to be at the given location in future.

For human resources, the expected location data repository 178 may include generic expected location data. The generic expected location data may indicate where all or most or a group of the one or more persons are expected to be at one or more time periods. For example, the generic availability data may include data indicating that all persons (or all persons except for a skeleton group of persons) are not expected to be in the office on a given day, e.g. because of a public holiday, an emergency, refurbishment of an office or part thereof, or a government-mandated office closure. Such generic expected location data may, in certain instances, override person-specific expected location data. For example, if an office is closed then a person cannot be in the office even if the person-specific expected location data indicates otherwise. Generic expected location data may be sourced from a facilities management system, a human resources system and/or a calendar system.

The computer system 100 includes resource-allocation configuration data 180. The resource-allocation configuration data 180 may be stored in the database 150 and/or may be stored as settings associated with a resource allocation engine 190, e.g. associated registry settings or a configuration file. The resource-allocation configuration data 180 is used by the resource-allocation engine 190 in allocating resources to time periods for series of recurring events.

The resource-allocation configuration data 180 may include repetition objectives data 182. The repetition objectives data may include repetition objectives themselves and associated data. The repetition objectives may be of any of the types previously described. The associated data may include one or more associations of repetition objectives with respective identifiers, e.g. a numerical ID or name for the repetition objective. These respective identifiers may be included in requests to allocate resources to a series of recurring events, such that the details of the repetition objective may not be included in the request and instead looked up by utilizing the association. As these details are not included in the request, the network bandwidth used in making the request may be reduced. The associated data may include one or more association of repetition objectives with types of series of recurring events. The type may be include in requests to allocate resources to a series of recurring events, such that the details of the repetition objective may not be included in the request and instead inferred based on the type. As these details are not included in the request, the network bandwidth used in making the request may be reduced. Furthermore, the maintainability of the computer system 100 may be increased as repetition objectives may be changed for a type of series of recurring events without changes to each of these requests.

The resource-allocation configuration data 180 may include adjustment criteria data 184. The adjustment criteria data may include adjustment criteria themselves and associated data. The adjustment criteria may be of any of the types previously described. The associated data may include one or more associations of adjustment criteria with respective identifiers, e.g. a numerical ID or name for the adjustment criteria. These respective identifiers may be included in requests to allocate resources to a series of recurring events, such that the details of the adjustment criteria may not be included in the request and instead looked up by utilizing the association. As these details are not included in the request, the network bandwidth used in making the request may be reduced. The associated data may include one or more association of adjustment criteria with types of series of recurring events. The type may be included in requests to allocate resources to a series of recurring events, such that the details of the adjustment criteria may not be included in the request and instead inferred based on the type. As these details are not included in the request, the network bandwidth used in making the request may be reduced. Furthermore, the maintainability of the computer system 100 may be increased as adjustment criteria may be changed for a type of series of recurring events without changes to each of these requests.

The resource allocation configuration data 180 may include preference data 186. The preference data may indicate time period preferences of one or more resources, e.g. one or more time periods when one or more persons would prefer to be allocated. For example, a person may prefer to be allocated to a time period for an event that is in the afternoon but is available to be allocated to a time period in the morning.

The resource allocation configuration data 180 may include constraint specification data 188. The constraint specification data 188 may indicate rules and/or other criteria that the allocations of resources to the time periods for series of recurring events must satisfy. For example, the constraint specification data 188 may include maximum occupancy or density of occupancy indicating that no more than a maximum amount of a type of one or more resources should be allocated at a given time period in a given location. This may be defined by technical or regulatory requirements, such as health and safety rules. Such rules may include social distancing rules or fire safety rules. For instance, social distancing rules may specify that one or more resources, e.g. human resources such as persons, should not be assigned to a given time period at or proximate to a given location that would result in them being less than a certain distance (e.g. one meter or two meters) apart. Equally, fire safety rules may limit the number of resources, e.g. human resources such as persons, that may be assigned to a given time period in an area associated with a particular fire exit.

The computer system 100 includes the resource allocation engine 190. The resource allocation engine 190 may be a computer program, or multiple computer programs, implemented on a single computing device or over a plurality of computing devices. The resource allocation engine 190 generates an allocation of one or more resources to a series of recurring events based on data from the database 150, the one or more data repositories 170, the resource allocation configuration data 180, and/or data include in a request to allocate the one or more resources to the series of recurring events. The resource allocation engine 190 may store the allocation in the database 150.

### Recurring Event Series Scheduling Method

Figure 2 illustrates an example method 200 for scheduling a series of recurring events. The example method may be implemented as one or more computer-executable instructions executed on one or more computing devices, e.g. the computing device 500 described in relation to Figure 5. The example method may be performed by the resource allocation engine 190 described with respect to Figure 1. Optional steps are indicated via dashed lines.

At step 210, one or more requests to allocate one or more resources to a series of recurring events are received. The one or more resources may be of any of the types described in relation to the resource data repository 172 of the computer system 100. For example, the one or more resources may include persons and event locations. The series of recurring events may be a series of recurring confluences, e.g. a series of recurring meetings or assemblies. The one or more requests may be or include a request to allocate a desired plurality of resources including the one or more resources and one or more unavailable resources. The request may have been received from a client device, e.g. one of the client devices 112 of the computer system 100.

The request specifies, for each event, a corresponding desired time period over which the one or more resources are to be allocated. The request may include one or more repetition objectives for specifying the corresponding time period for each event. The one or more repetition objectives may include one or more of a recurrence definition, a periodicity definition, a day reference definition and/or a named day definition. Further details of the one or more repetition objectives have been described in relation to Figure 1.

The request further specifies one or more adjustment criteria for defining one or more permissibly adjusted time periods, for one or more of the events, one or more permissibly adjusted time periods from the desired time period. For example, the one or more adjustment criteria may be used to derive one or more permissibly adjusted time periods from a desired time period. The one or more adjustment criteria may include one or more of a time range; a date range; a time flexibility parameter; a date flexibility parameter; a plurality of time alternatives; and/or a plurality of date alternatives. The one or more adjustment criteria may include one or more adjustment constraints. Further details of the adjustment criteria and how they may be combined have been described in relation to Figure 1.

The receiving of the one or more requests of step 210 may be subsequent to receiving an initial request to allocate one or more resources to a first event. Alternatively, the initial request may be included in the one or more requests of step 210. The initial request may specify a time interval, e.g. a week or month, within which the one or more resources are to be allocated. In response to the initial request, first resource availability data indicative of an availability of the one or more resources during the time interval may be obtained. Then, a first time period for the first event may be determined based on the resource availability during determining, based on the first resource availability data, a first time period for the first event; and allocating the one or more resources to the first time period. The one or more resources may be allocated to the first time period. One or more of the desired time periods of the one or more request of step 210 may be based directly or indirectly on the first time period. For example, the desired time period for the earliest of the series of recurring events of step 210 may be based on the first time period, and each of the desired time periods for subsequent events of the series of recurring events may be based on the desired time period for the previous event. In some implementations, the initial request may be received from a person, and the one or more requests of step 210 may be initiated without further user intervention, e.g. automatically initiated, subsequent to the initial request.

At step 220, for each event of the series of recurring events, resource availability data indicative of the availability of the one or more resources during the desired time period is obtained. The obtained resource availability data for each event of the series of recurring events may include, but is not limited to, data indicating whether the one or more resources are available during the desired time period; and/or the amounts of the one or more resources that are available during the desired time period. The resource availability data may be of any of the types described in relation to the resource availability data repository 174 of the computer system 100.

At step 230, where the one or more requests are or include a request to allocate a desired plurality of resources including the one or more resources and the one or more unavailable resources, importance data indicative of a relative importance of the one or more resources and the one or more unavailable resources may be obtained for at least one of the events of the series of recurring events. The importance of each of the one or more resources and/or one or more unavailable resources may indicate the relative importance of each resource to events. The importance may include a general importance and/or a specific importance. The general importance may indicate an overall importance of a resource compared to other resources. The specific importance may indicate the importance of a resource to the series of recurring events compared to other resources to be allocated for the series of recurring events. The resource importance data may be obtained from a resource importance data repository, e.g. resource importance data repository 176. Alternatively, or in addition, the importance data may be specified in the request (e.g. the requesting person may specify that certain resources are important or essential for the event).

At step 240, expected location data indicative of an expected location of at least a portion of the one or more resources during the desired time period is obtained for at least one event of the series of recurring events. The expected location data may indicate the expected locations of at least a portion of the one or more resources, e.g. one or more movable resources of the movable resources, during the desired time period. The expected location data may be of any of the types described in relation to the expected location data repository 178 of the computer system 100.

At step 250, preference data is obtained. The preference data is indicative of one or more time period preferences of at least a portion of the one or more resources, e.g. one or more persons of the one or more resources. The time period preferences may indicate one or more time periods when one or more persons of the one or more resources would prefer to be allocated. The one or more time period preferences may indicate a preference for a certain one or more time periods of the one or more permissibly adjusted time periods.

For each event of the series of recurring events, steps 260 and 270 are performed.

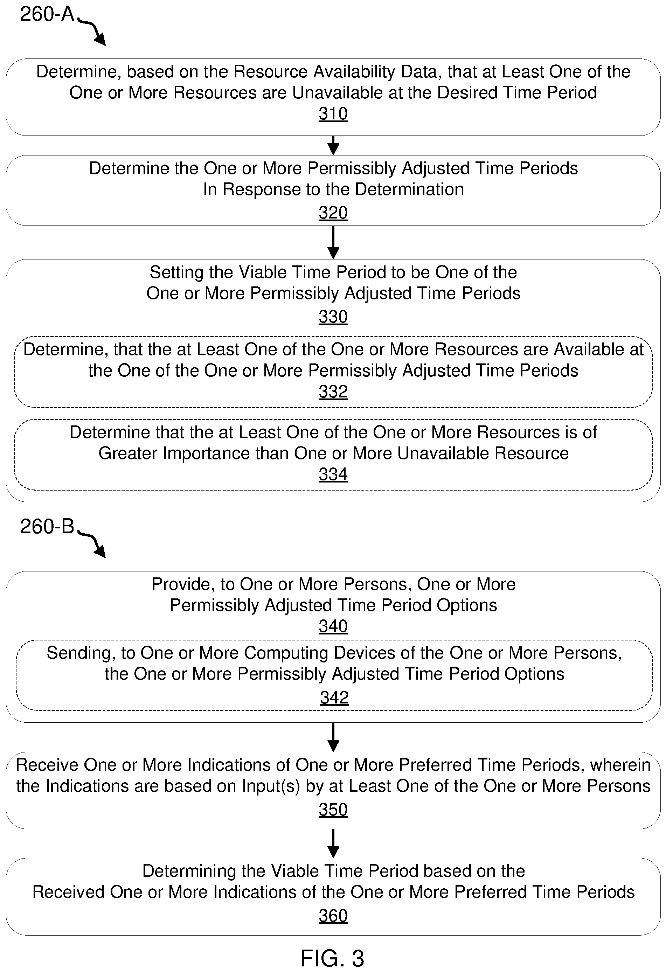

At step 260, a viable time period which is determined. The viable time period is either the desired time period or a permissibly adjusted time period. The viable time period is determined based on at least the resource availability data. Where expected location data, resource importance data, and/or preference data have been obtained, the determination of the viable time period may be based on any or any combination of these. Implementations of step 260 are described with respect to Figure 3.

At step 270, the one or more resources are allocated to the viable time period. Allocating the one or more resources to the viable time period may include storing an indication of the allocation of the one or more resources to the viable time period in a database or to a data store of an external system, e.g. a calendar application data store or an external resource allocation system data store.

### Viable Time Period Determination Method

Figure 3 illustrates a first method 260-A and a second method 260-B for implementing the viable time period determination step 260. For the sake of clarity, the first method 260-A and the second method 260-B are described independently. However, these two methods and steps thereof may be combined as appropriate.

The first method 260-A includes the steps 310, 320 and 330.

At step 310, it is determined that at least one of the one or more resources is unavailable at the desired time period based on the resource availability data. The determination that at least one of the one or more resources is unavailable at the desired time period may include determining that a quorum amount or proportion of the at least one of the one or more resources are not available at the desired time period. For example, the at least one of the one or more resources may include persons having a specified role, e.g. software engineers, and at least a minimum number, e.g. at least three, or minimum proportion, e.g. at least half, may not be available at the desired time period.

At step 320, one or more permissibly adjusted time periods are determined. This determination may be in response to determining that the at least one of the one or more resources is unavailable at the desired time period. The determination of the one or more permissibly adjusted time periods may include deriving one or more permissibly adjusted time periods from the desired time period using the adjustment criteria. The one or more permissibly adjusted time periods may be a plurality of permissibly adjusted time periods.

At step 330, the viable time period is set to be one of the one or more permissibly adjusted time periods. The setting of the viable time period to the one of the one or more permissibly adjusted time periods may be or include an optimization procedure to select a best viable time period of the one or more permissibly adjusted time periods. The optimization procedure may select the best viable time period based on one or more of the resource availability data, the expected location data, and/or the preference data. The optimization procedure may select the best viable time period in accordance with one or more optimization values and/or criteria calculated based on the data used in the optimization. Those of the one or more permissibly adjusted time periods selectable by the optimization procedure may be limited by one or more constraints defined by constraint specification data.

Step 330 may include a step 332 where it is determined, based on the resource availability data, that the at least one of the one or more resources are available at the one of the one or more permissibly adjusted time periods. For example, the one or more permissibly adjusted time periods may be a plurality of permissibly adjusted time periods. In the plurality of permissibly adjusted time periods, there may be one or more time periods where the one or more resources are available and one or more other time periods where the one or more resources are not available. Therefore, the viable time period may be set to one of the plurality of permissibly adjusted time periods at which the one or more resources are available. Where there are multiple permissibly adjusted time periods of the plurality of permissibly adjusted time periods at which the one or more resources are available, the viable time period may be set to one of these multiple permissibly adjusted time periods based on a determination of one of these time periods as having the most available resources, based on preference data where this has been obtained, or based on a combination thereof. Where expected location data has been obtained, the viable time period may be set based on this, e.g. the viable time period may be set to one of the plurality of permissibly adjusted time periods at which the one or more resources are proximate to each other.

Step 330 may include a step 334 where it is determined, based on the resource importance data, that at least one of the one or more resources is of a greater importance than one or more unavailable resources of the desired plurality of resources. This determination may be used to set the viable time period as there may not be a permissibly adjusted time period at which all of the desired plurality of resources are available. Therefore, the viable time period may be set to one of the permissibly adjusted time periods at which resources of a greater importance are available.

The second method 260-B includes the steps 340, 350 and 360.

At step 340, one or more permissibly adjusted time period options are provided to one or more persons. The one or more persons may be at least a portion of the one or more resources. Providing the one or more permissibly adjusted time period options to the one or more persons may include a step 342 where the one or more permissibly adjusted time period options are sent to one or more computing devices of the one or more persons. The one or more time period options may be sent using any of the methods described with respect to the one or more interfaces 130 of the computer system 100, e.g. the one or more time period options may be sent as service requests, web content or messages. The one or more computing devices may be respective client devices of the one or more persons, e.g. the client devices 112 of the computer system 100. The one or more computing devices may present the one or more time period options to the respective one or more persons, e.g. display or audibly output the one or more time period options.

At step 350, one or more indications of one or more preferred time periods are received. The one or more indications may be based on one or more inputs by at least one of the one or more persons in response to the provision of the one or more permissibly adjusted time period options. The one or more indications of the preferred time periods may include one or more selections of at least one of the one or more permissibly adjusted time period options. These one or more selections may be based on one or more selection inputs by the at least one of the one or more persons, e.g. selecting at least one user interface element corresponding to the at least one of the one or more permissibly adjusted time period options. Alternatively or additionally, the one or more indications of the preferred time periods may include a time period that is not one of the permissibly adjusted time period options. This time period may be a permissibly adjusted time period that was not included in the permissibly adjusted time period options.

At step 360, the viable time period is determined based on the received one or more indications of the one or more preferred time periods. The viable time period may be determined to be a most popular of the one or more preferred time periods, e.g. the time period that has been indicated as being preferred the greatest number of times. For example, where the one or more indications are one or more selections of at least one of the one or more permissibly adjusted time period options, the viable time period may be determined as the one of the one or more permissibly adjusted time period options that has been selected the greatest number of times.

### Time Period Update Method

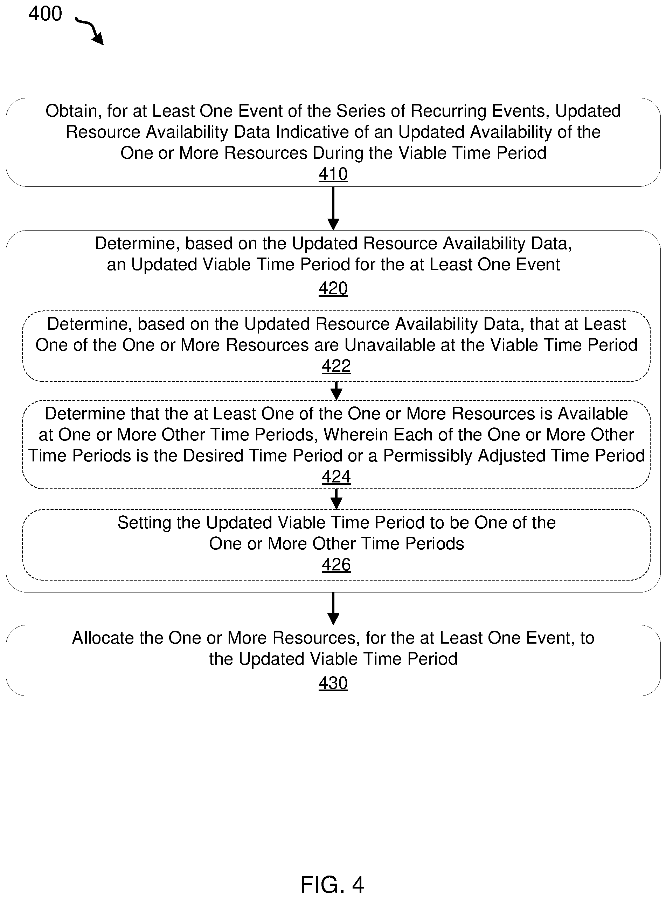

Figure 4 illustrates an example method 400 for updating one or more time periods based on updated resource availability. The example method may be implemented as one or more computer-executable instructions executed on one or more computing devices, e.g. the computing device 500 described in relation to Figure 5. The example method may be performed by the resource allocation engine 190 and/or the application server side runtime described with respect to Figure 1. Optional steps are indicated via dashed lines.

The example method 400 is performed subsequent to the example method 200. For example, the example method 200 may have allocated the one or more resources to previously viable time periods for a series of recurring events based on previous resource availability data. The adjustment criteria and desired time periods derived by the example method 200 may be maintained and/or regenerated and are used by the example method 400. The example method 400 may be performed at a subsequent time, e.g. an hour, day or week later, at which updated resource availability data is available.

At step 410, updated resource availability data is obtained for at least one event of the series of recurring events. The updated resource availability data is indicative of an updated availability of the one or more resources during the (previously) viable time period for the at least one event.

At step 420, an updated viable time period for the at least one event is determined based on the updated resource availability data. The updated viable time period is either the desired time period or a permissibly adjusted time period.

Step 420 may include a step 422, where it is determined, based on the updated resource availability data, that at least one of the one or more resources is unavailable at the (previously) viable time period. For example, the (previous) resource availability data may have indicated that the at least one of the one or more resources are available at the (previously) viable time period, while the updated resource availability data indicates that they are no longer available, e.g. because the one or more resources have been allocated to another event at the (previously) viable time period.

Step 420 may include a step 424, where it is determined, based on the updated resource availability data, that the at least one of the one or more resource is available at one or more other time periods. Each of the one or more other time periods is the desired time period or a permissibly adjusted time period. Each of the permissibly adjusted time periods of the one or more other time periods may be derived from the desired time period using the adjustment criteria.

Step 420 may include a step 426, where the updated viable time period is set to be one of the one or more other time periods. The updated viable time period may be set to one of the one or more other time periods based on preference data where this has been obtained, based on a determination of one of these time periods as having the most available resources, or based on a combination thereof. Where expected location data has been obtained, the updated viable time period may be set based on this, e.g. the updated viable time period may be set to one of the one or more other time periods at which the one or more resources are proximate to each other. The setting of the updated viable time period to the one of the one or more other time periods may be or include an optimization procedure to select a best updated viable time period of the one or more other time periods. The optimization procedure may select the best updated viable time period based on one or more of the updated resource availability data, the expected location data, and/or the preference data. The optimization procedure may select the best updated viable time period in accordance with one or more optimization values and/or criteria calculated based on the data used in the optimization. Those of the one or more other time periods selectable by the optimization procedure may be limited by one or more constraints defined by constraint specification data.

At step 430, the one or more resources are allocated to the updated viable time period for the at least one event. The allocation of the one or more resources to the updated viable time period may be a reallocation of the one or more resources from the (previous) viable time period to the updated viable time period. The allocation of the one or more resources may include updating an indication of the allocation of the one or more resources in a database or a data store of an external system, e.g. a calendar application data store or an external resource allocation system data store, to indicate that the one or more resources are allocated to the updated viable time period.

### Computing Device

Figure 5 shows a computing device 500 using which the embodiments described herein may be implemented.

The computing device 500 includes a bus 510, a processor 520, a memory 530, a persistent storage device 540, an Input/Output (I/O) interface 550, and a network interface 560.

The bus 510 interconnects the components of the computing device 500. The bus may be any circuitry suitable for interconnecting the components of the computing device 500. For example, where the computing device 500 is a desktop or laptop computer, the bus 510 may be an internal bus located on a computer motherboard of the computing device. As another example, where the computing device 500 is a smartphone or tablet, the bus 510 may be a global bus of a system on a chip (SoC).

The processor 520 is a processing device configured to perform computer-executable instructions loaded from the memory 530. Prior to and/or during the performance of computer-executable instructions, the processor may load computer-executable instructions over the bus from the memory 530 into one or more caches and/or one or more registers of the processor. The processor 520 may be a central processing unit with a suitable computer architecture, e.g. an x86-64 or ARM architecture. The processor 520 may include or alternatively be specialized hardware adapted for application-specific operations.

The memory 530 is configured to store instructions and data for utilization by the processor 520. The memory 530 may be a non-transitory volatile memory device, such as a random access memory (RAM) device. In response to one or more operations by the processor, instructions and/or data may be loaded into the memory 530 from the persistent storage device 540 over the bus, in preparation for one or more operations by the processor utilising these instructions and/or data.

The persistent storage device 540 is a non-transitory non-volatile storage device, such as a flash memory, a solid state disk (SSD), or a hard disk drive (HDD). A non-volatile storage device maintains data stored on the storage device after power has been lost. The persistent storage device 540 may have a significantly greater access latency and lower bandwidth than the memory 530, e.g. it may take significantly longer to read and write data to/from the persistent storage device 540 than to/from the memory 530. However, the persistent storage 540 may have a significantly greater storage capacity than the memory 530.

The I/O interface 550 facilitates connections between the computing device and external peripherals. The I/O interface 550 may receive signals from a given external peripheral, e.g. a keyboard or mouse, convert them into a format intelligible by the processor 520 and relay them onto the bus for processing by the processor 520. The I/O interface 550 may also receive signals from the processor 520 and/or data from the memory 530, convert them into a format intelligible by a given external peripheral, e.g. a printer or display, and relay them to the given external peripheral.

The network interface 560 facilitates connections between the computing device and one or more other computing devices over a network. For example, the network interface 560 may be an Ethernet network interface, a Wi-Fi network interface, or a cellular network interface.

### Resource Allocation Plan Generation Method

Figure 6 illustrates an example method 200-A for generating a resource allocation plan. The example method may be implemented as one or more computer-executable instructions executed on one or more computing devices, e.g. the computing device 500 described in relation to Figure 5. The example method may be performed by the resource allocation system described with respect to Figure 1A and/or the resource allocation engine 190 described with respect to Figure 1D. Optional steps are indicated via dashed lines.

At step 210-A, resource availability data indicative of a set of one or more resources available at a future time period is obtained. The resource availability data may be obtained using any suitable data retrieving and/or receiving mechanism. For example, the resource availability data may be retrieved from a database and/or file store, or the resource availability data may be received from a resource availability data service over a network. The obtained resource availability data may include: information about the types of resources available in the set of one or more resources; information about amounts of each of the types of resources available in the set of one or more resources; information about the locations of each and/or groups of resources in the set of one or more resources; and/or specific properties for each and/or groups of resources in the set of one or more resources. The resources may be of any of the types and have any of the properties previously described in relation to the resource availability data included in the resource availability data repository 174.

At step 220-A, requirements data indicative of a requirement for a subset of a plurality of resource users to have access to a subset of the set of the one or more resources is obtained. This requirements data may specify requirements at least for the future time period. The requirements data may be obtained using any or any combination of suitable data retrieving and/or receiving mechanism, such as those described in relation to step 210-A.

Obtaining the requirements data may include a step 222-A of obtaining resource requirements data. The resource requirements data indicates requirements for a first one or more resource users of the subset of the plurality of resource users to have access to specified resources of the subset of the set of one or more resources. These requirements may be static requirements or dynamic requirements.

Static requirements are requirements for a given resource user to have access to a given resource. An example of a static requirement is a requirement for a given user to have access to a given piece of equipment. For example, a given 3D printer, area of workspace, piece of workspace equipment, or computing device may have been configured for the given user's specific requirements such that it is not readily substitutable by another piece of equipment. For example, a user may be assigned to a specific desk/workspace, e.g. the user cannot be assigned another desk/workspace even if it otherwise matches the user's requirements. For example, the user's role may require access to a given piece of equipment that is located at this desk/workspace; the user's role may require the processing of or access to a significant amount of paper documentation that would be impractical to move between workspaces; the given desks/workspace may be proximal to a user's team that is required for their role; or the desk/workspace may have been adapted for a user having a disability.

Dynamic requirements are requirements for a user to have access to one or more resources of a given type and/or meeting certain criteria. An example of a dynamic requirement is a requirement for a user to have access to equipment meeting given criteria, e.g. equipment of a given make or model, or equipment having a certain specification. For example, a user may require access to a microscope or 3D printer of a given make and/or model, or may require computing equipment meeting a minimum specification, e.g. having at least a given amount of RAM and processing power. Another example of a dynamic requirement is a requirement for a user to be assigned to a desk/workspace meeting certain criteria. For example, the user may require a desk/workspace having a certain minimum size or proximate to certain equipment or one or more desks/workspaces allocated to team members. Dynamic requirements differ from static requirements in that when fulfilling dynamic requirements users may be assigned any resource of the given type and/or meeting the certain criteria.

Obtaining the requirements data may include a step 224-A of obtaining calendar data. The calendar data may be obtained from a data store associated with a calendar service and/or application. The calendar data includes data indicating an obligation for a second one or more users of the subset of the plurality of resource users to be proximate to a resource location. As these users have an obligation to be at the resource location, there is a requirement to allocate these second one or more users resources proximate to that resource location.

Obtaining the requirements data may include a step 226-A of obtaining contingency requirements data. The contingency requirements data may specify an amount and/or proportion of the set of one or more resources that should be left unallocated as contingency resources at the future time period. The contingency requirements data may be part of contingency specification data, e.g. contingency specification data 186. The obtained contingency requirements data may be the relevant part of the contingency specification data for the future time period, e.g. the part of the contingency specification data relevant to the length of time between the current time and the future time period.

Obtaining the requirements data may include a step 228-A of obtaining constraint specification data. The constraint specification data indicates rules and/or other criteria that a resource allocation plan must satisfy. Examples of constraint specification data are described in relation to the constraint specification data 188.

At step 230-A, absence data may be obtained. The absence data indicates that one or more users do not require or desire resources in general and/or proximate to a given resource location.

The absence data may include allocation absence data. The allocation absence data indicates that one or more users do not require or desire an allocation of resources at a given time. The allocation absence data may include data indicating that one or more users are not working at a given time because of annual leave absence, sickness absence, non-working days (e.g. for part-time workers) and/or public holidays. The allocation absence data may be sourced from a human resources (HR) system and/or country or region-specific public holiday calendars.

The absence data may include location absence data. The location absence data may indicate that one or more users will not be proximate to a resource location at a given time, e.g. in a given office, so do not desire or require resources proximate to that resource location at the given time. The location absence data may include user-specific location absence data, e.g. data indicating that certain users are on a business trip and/or are not present at the location because of a personal requirement to work from home. User-specific location absence data may be sourced from HR systems and/or calendar data. The location absence data may include generic location absence data indicating that that all, most or a group of users cannot be proximate to a resource location. For example, the generic location absence data may indicate that a given office or part thereof, such as a floor or department section, is closed to all or most users, e.g. closed to all users except for a designated staff. An office or part thereof may be closed because of a public holiday, a government mandated closure, or ongoing refurbishments. Generic location absence data may be sourced from a facilities management system, calendar data or a HR system.

At step 240-A, preference data may be obtained. The preference data indicates for at least one or more other resource users of the plurality of users whether the respective resource user desires one or more resources of the at least a portion of remaining resources of the set of resources at the future time period. For example, the at least one or more other resource users may have a preference for resources, such as a desk/workspace, at a resource location, such as an office or a particular floor or section thereof, to be allocated to them but may be able to perform their role remotely without these resources.

At step 250-A, a resource allocation plan is generated based on the requirements data; if absence data has been obtained, the absence data; and, if preference data has been obtained, the preference data. Generating the resource allocation plan may include allocating the set of one or more resources available at the future time period to the plurality of resource users such that the requirements specified by the requirements data are fulfilled; where absence data has been obtained, removing, preventing or changing certain allocations based on the absence data, and, where preference data has been obtained, the desires for resources indicated in the preference data are accounted for, to the extent feasible. Furthermore, one or more optimization goals, e.g. optimization goal specified in optimization specification data, may be optimized for. It should be noted that, due to the computational complexity of calculating a resource allocation plan that is maximally optimized in accordance with the requirements data, the preference data and/or the one or more optimization goals, the resource allocation plan may instead be approximately optimized in accordance with the desires for resources, e.g. using a less computationally complex heuristic algorithm. The generated resource allocation plan may be stored, e.g. in a database or as a file, and/or may be output for use by an application.

Generating the resource allocation plan includes a step 252-A of allocating the subset of the set of one or more resources to the subset of the plurality of resource users. This allocation is based on the requirements data ensuring that the subset of the plurality of resource users who require resources are given priority and therefore assigned resources first. The allocation may first include allocating to the first one or more resource users of the subset of the plurality of resource users to have access to the specified resources of the subset of the set of one or more resources. The allocation may then include allocating to the second one or more resource users required resources of the subset of the set of one or more resources that are proximate to the resource location at which the second one or more resource users have an obligation to be located. The allocation may then include allocating as contingency, e.g. deliberately leaving unallocated, the proportion or amount of the set of one or more resources based on the contingency requirements data. This contingency proportion or amount of the set of one or more resources may form part of the subset of the set of one or more resources.

Generating the resource allocation plan includes a step 254-A of allocating remaining resources of the set of one or more resources to other users of the plurality of resource users. The allocation may be based on the preference data, such that, where possible, the other users of the plurality of resource users are allocated resources that they desire. For example, a resource user that has a desire to work in the office, but can work remotely from home, may be allocated a desk/workspace in the office based on the preference data. The allocation of the remaining resources may alternatively or additionally involve allocating the remaining resources in a way that optimizes the one or more optimization goals.

### Resource Allocation Preference Data Collection Method

Figure 7 illustrates an example method 300-A for collecting preference data from resource users. The example method may be implemented as one or more computer-executable instructions executed on one or more computing devices, e.g. the computing device 500 described in relation to Figure 5.

In step 310-A, preference queries are sent to client devices of the plurality of resource users. The preference queries may be communicated using a web interface, e.g. web interface 132; an app interface, e.g. app interface 134; or a text interface, e.g. text interface 136. In response to receiving preference queries through one of these interfaces, the client devices may display the preference query or a representation thereof. Interface elements and/or text representing the preference query may be displayed on a display incorporated into or associated with the client device. For example, a web page displaying the preference query may be shown in a browser application; app user interface elements including the preference query may be shown in an app; or a textual message including the preference query may be shown in a messaging application. An example of a preference query may be a question to the resource users as to whether they would prefer to work in the office in a given time period. The preference query may request a binary (e.g. yes or no) response, a qualitative response, or a quantitative response (e.g. a numerical indication of the strength of the preference)

In step 320-A, preference query responses are received from the client devices. The received preference query responses may be sent from the client devices based on input by the resource users to the client devices. For example, the resource user may make a web page input, click on an app user interface element, or type a message indicating their response to the preference query, and, in response to this input, the preference query responses may be sent.

In step 330-A, the received preference query responses are incorporated into preference data, e.g. preference data stored in a database for use by a resource allocation engine. For users who have not previously provided a response to the preference query, incorporating the preference query responses may include adding the preference query response for that user to the preference data. For users who have provided a response to the preference query before, but where this response has changed, incorporating the received preference query may include updating a previous preference query response stored in the preference data.

### Resource Allocation Plan Updating Method

Figure 8 illustrates an example method 400-A for updating a resource allocation plan. The example method may be implemented as one or more computer-executable instructions executed on one or more computing devices, e.g. the computing device 500 described in relation to Figure 5.

In step 410-A, an updated resource allocation plan is generated for a future time period based on a prior resource allocation plan for the future time period. The updated resource allocation plan may be generated according to the resource allocation plan generation method 200-A. However, the generation of the updated resource allocation plan based on the prior resource allocation plan may differ as one or more aspects of the prior resource allocation plan may have become fixed such that they cannot be changed in the updated resource allocation plan.

In step 420-A, the updated resource allocation plan and the prior resource allocation plan are compared. The comparison may include determining differences in quantities of available and unallocated resources between the updated resource allocation plan and the prior resource allocation plan.

In step 430-A, it is determined that there is an increased availability of one or more resources based on the comparison of the updated resource allocation plan and the prior resource allocation plan. There may be an increased availability of one or more resources due to a change in requirements, e.g. in resource requirements or in obligations for given resource users to be at given resource locations. Alternatively or additionally, there may be an increased availability because the amount or proportion of the one or more resources to be reserved as contingency may be less at the time at which the updated resource allocation plan than when the prior resource allocation plan was generated. For example, the prior resource allocation plan may have been generated a month before the future time period, where the contingency requirement was 30% of the one or more resources, while the updated resource allocation plan may be being generated a week before the future time period, where the contingency requirement is 10% of the one or more resources.

In step 440-A, resource users who desired the one or more resources, of which there is an increased availability, but who were not allocated these resources in the prior resource allocation plan are identified. These one or more resource users may be determined based on the preference data and the prior resource allocation plan.

In step 450-A, one or more messages are sent to client devices of the resource users indicating that there is an increased availability of the one or more resources that they desired but were not previously allocated. These one or more messages may be in any suitable form, e.g. text messages, messaging application messages, emails, or an app notification.

In step 46-0A, one or messages are received from a client device of at least one of the resource users confirming a continued desire of the at least one of the resource users for the one or more resources. The received message may be a message from a messaging application, a text message, an email or a message from an app sent in response to a user input confirming their continued desire for the one or more resources. Such a confirmation from resource users may be important, as users' preferences may have changed. For example, a user may have desired a desk/workspace in the office but having previously not been allocated a desk/workspace in the office has made arrangements dependent on working from home at the future time period. Therefore, the user may no longer desire a desk/workspace in the office at the future time period.

In step 470-A, a further updated resource allocation plan is generated. In response to the confirmation of the continued desire of the at least one of the resource users for the one or more resources, the further updated resource allocation plan includes an increased allocation of the one or more resources to the at least one of the resource users.

The method of FIG. 8 may be implemented repeatedly, (e.g. on a periodic basis or in immediate succession). For instance, the method may be implemented repeatedly, assigning resources in order of a predefined user priority. Step 440-A may identify a set of highest priority resource users that have, so far, not been allocated desired resources. If further resources remain after this subset of resource users has responded and had appropriate resources allocated, then the method may repeat to send further message(s) to further resource users to attempt to allocate the remaining resources. This may be implemented in descending order of resource user priority (e.g. based on each resource user being assigned a corresponding priority value or based on predefined groups of resource users that are assigned corresponding priorities, e.g. a high priority group, a medium priority group and a low priority group).

### Confluence Resource Allocation Method

Figure 9 shows a method 200-B for allocating resources for a confluence according to an embodiment. The method 200-B may be implemented as one or more computer-executable instructions executed on one or more computing devices, e.g. the computing device 500 described in relation to Figure 5. The method 200-B may be performed by the application server side runtime 140 and/or the resource allocation engine 190 described with respect to Figure 1D and/or the resource allocation system 12 described with respect to Figure 1A. Optional steps are indicated via dashed lines.

At step 210-B, a request to schedule a confluence of a plurality of entities during a future time interval is received. The request may be received from a client device of a host entity desiring to schedule the confluence. The confluence of the plurality of entities may be an assemblage, a gathering, an assembly, a meeting and/or a convergence of the plurality of entities. Each of the plurality of the entities may be any of a person; a group of people; representative(s) of a group of people, e.g. representative(s) of a corporate entity; or an automated agent. The future time interval may start at a first time and end at a second time with a length of time between the first time and the second time. Both the first and second times may be specified in the request, or one of the first and second times may be specified along with a proposed duration for the time interval. The future time interval may be unbounded, e.g. the future time interval may start at a first time but the future time interval may not have a set end or the future time interval may end at a second time but a start may not be explicitly specified. Each of the first time and/or the second time may include a date component and a time of day component. The time of day component may include hour components and minute components. The confluence is associated with one or more confluence locations, e.g. one or more general confluence locations and/or one or more precise confluence locations.

At step 220-B, expected location indicators indicating expected locations of the plurality of entities during the future time interval are obtained. Obtaining the expected location indicators may include retrieving the expected location indicators, e.g. from the expected location data repository 178, and/or receiving the expected location indicators, e.g. via a HTML message or service request. The expected location indicators may be derived from either or both of entity-specific location data and/or generic location data of any of the types described with respect to the expected location data repository 178. Where an entity is expected to be at multiple locations during the future time interval, the respective location indicator may indicate each of these locations and the parts of the future time interval where the entity is expected to be at each of these locations.

At step 230-B, resources are allocated for the confluence during the future time interval based on the expected location indicators.

Where at least one location of the associated one or more confluence locations is a general confluence location, allocating the resources for the confluence may include allocating one or more precise confluence locations, e.g. one or more meeting rooms, within the general confluence location, e.g. one or more respective offices. The size and/or capacity of each of the one or more precise confluence locations allocated (e.g. the number of people who can be accommodated in a meeting room) may be based on the number of entities who are expected to be proximate to the general confluence location based on the expected location indicators. This may enable utilisation of available precise confluence locations, e.g. meeting rooms, within general confluence locations, e.g. offices, to be maximised.

Allocating the resources for the confluence during the future time interval may include determining a future time period for the confluence within the future time interval, e.g. the specific time(s) at which the confluence is to occur within the future time interval. The future time period may be shorter than the future time interval. The length of the future time period may be equal to a request confluence duration. The future time interval may therefore indicate a broad availability or preference by the host, and the most appropriate future time period within this future time interval may be chosen and allocated for the confluence.

The determination of the future time period may include determining, based on the expected location indicators, a future time period within the future time interval where at least entities of the plurality of entities who are required to physically attend the confluence are proximate to the one or more confluence locations. The determination may be further based on whether others of the plurality of entities, e.g. entities who may prefer to but are not required to physically attend the confluence, are proximate to the one or more confluence location. The determination may be further based on the availability of certain confluence equipment over the future time interval. An example method 300-B by which the future time interval for the confluence may be determined is described in relation to Figure 10.

Allocating the resources for the confluence during the future time interval may include allocating equipment for the confluence. The equipment allocated may be based on the expected location indicators. For example, equipment may be allocated for entities depending on whether or not they are expected to be proximate to the one or more confluence locations. Different equipment may be required dependent on whether an entity is proximate to the confluence location, hence attending in person, or is not, hence attending remotely. For example, an entity attending in person may require a chair, while an entity attending remotely may require video conferencing equipment.

Allocating resources for the confluence may include a step 232-B of determining that a first one or more of the plurality of entities are not expected to be proximate to any of the one or more confluence location(s) at a future time period during the future time interval. The future time period may be the future time period at which the confluence is scheduled to take place.

Allocating resources for the confluence may include a step 234-B of providing telecommunication information facilitating telecommunication by the first one or more of the plurality of entities with the one or more confluence locations. Where the one or more confluence locations are one or more general confluence locations, the provided telecommunication information may facilitate telecommunication with respective precise confluence locations within the one or more general confluence locations. The provided telecommunication information may include a phone number, a meeting code, name and/or number; a meeting password; and/or a meeting link, e.g. a meeting universal resource identifier (URI). The telecommunication information may facilitate telecommunication using a telecommunication application.

At step 240-B, updated expected location indicators for the plurality of entities are obtained. The updated expected location indicators may take any of the same forms as the expected location indicators and may be obtained using any of the same mechanism. The updated expected location indicators may be obtained in response to a scheduled or manually triggered request to update a confluence schedule. Alternatively or additionally, the updated expected location indicators may be obtained in response to an event message received indicating that the expected locations of one or more of the entities have changed.

At step 250-B, the resource allocation for the confluence during the future time interval is updated based on the updated expected location indicators. The updating of the resource allocation may include changing one or more precise confluence locations allocated for the confluence, changing the equipment allocated for the confluence. and/or changing the use of telecommunication for the confluence.

Updating the resource allocation for the confluence may include a first submethod 252-B.

The first submethod 252-B includes a step 252-B-1 of determining, based on the updated expected location indicators, that a second one or more of the plurality of entities are not expected to be proximate to any of the confluence locations. The second one or more of the plurality of entities may be different entities to the first one or more of the plurality of entities. The second one or more entities may be entities that were previously expected, based on the expected location indicators, to be proximate to at least one of the one or more confluence locations but are no longer expected, based on the updated expected location indicators, to be proximate to any of the one or more confluence locations.

The first submethod 252-B includes a further step 252-B-2 of providing telecommunication information facilitation telecommunication with the one or more confluence locations to the second one or more of the plurality of entities. The telecommunication information may be of any of the types described in relation to providing the telecommunication information in step 234-B.

Updating the resource allocation for the confluence may alternatively or additionally include a second submethod 254-B.

The second submethod 254-B includes a step 254-B-1 of determining a change in the number of plurality of entities expected to be proximate to at least one of the one or more confluence locations based on the updated expected location indicators. The change may be an increase or a decrease in the number of entities expected to be proximate to a given confluence location. The change in the number of entities may be caused by additional entities of the plurality of entities being proximate to the confluence location, one or more entities that were expected to be proximate to the confluence location no longer being expected to be proximate to the confluence location, or both, e.g. two additional entities may be expected to be proximate to the confluence location but another entity that was expected to be proximate to the confluence location is no longer expected to be proximate.

The second submethod 254-B-2 includes a further step of updating the allocation of resources for the confluence based on the change in the number of plurality of entities expected to be proximate to the at least one of the one or more confluence locations. Where there is an increase in the number of the plurality of entities expected to be proximate to a given confluence location of the one or more confluence locations, the updating of the allocation of resources may include allocating a precise confluence location having a greater capacity within the given confluence location. For example, allocating a larger meeting room within an office where the given confluence location is an office. Where there is a decrease in the number of the plurality of entities expected to be proximate to the given confluence location, the updating of the allocation of resources may include allocating a precise confluence location have a lesser capacity within the given confluence location. For example, allocating a smaller meeting room within an office where the given confluence location is an office. This may facilitate dynamic meeting room usage maximisation. Updating the allocation may alternatively or additionally include updating the allocation of confluence equipment dependent on the change in number of the plurality of entities, e.g. the number of chairs allocated for the confluence. Updating the allocation may also alternatively or additionally include updating the future time period during the future time interval at which the confluence is scheduled and correspondingly the future time period at which the resources are allocated. For example, if there is a decrease in the number of the plurality of entities expected to be proximate to at least one of the one or more confluence locations at a future time period at which the confluence was previously schedule, the confluence may be rescheduled to another future time period during the future time interval where more of the plurality of entities are proximate to the confluence location.

The above method may be applied in scenarios where multiple confluences are being scheduled, and resources accordingly allocated for each of these confluences. The allocation of resources for confluences may, therefore, involve determining a priority of each confluence and prioritising allocation of resources to those confluences having the greatest priority. The priority of each confluence may be specified as a confluence priority weight representative of an importance of the confluence based on a multiplicity of factors. The multiplicity of factors may include: the importance of the entities of the confluence (e.g. whether one or more of the entities are VIP entities); the general availability of the entities of the confluence, e.g. confluences involving entities having little availability may have to be given a greater priority; a host entity's assessment of the priority, e.g. an indication from the host entity as to whether they consider the confluence's priority to be high, medium or low; the type of confluence, e.g. types of confluences including VIPs or external entities, such as board meetings or interviews, may be given greater priority while regular confluences of internal entities may be given a lower priority.

### Confluence Scheduling Method

Figure 10 shows a method 300-B for scheduling confluences according to an embodiment. The method may be implemented as one or more computer-executable instructions executed on one or more computing devices, e.g. the computing device 500 described in relation to Figure 5. The method 300-B may be performed by the application server side runtime 140 and/or the resource allocation engine 190 described with respect to Figure 1D and/or the resource allocation system described with respect to Figure 1A. Optional steps are indicated via dashed lines.

At step 310-B, a request to schedule a confluence of a plurality of entities during a future time interval is received from a client device of a host entity. The confluence-scheduling request may include one or more confluence properties and/or requirements, such as attendee entities required or desired at the confluence; one or more confluence locations associated with the confluence, e.g. one or more general confluence locations; and the future time interval for the confluence. The plurality of entities may include internal entities, e.g. entities within the same organisation as the host entity, and external entities, e.g. entities not within the same organisation as the host entity.

At step 320-B, one or more property suggestions for the confluence may be sent to the client device of the host entity. The one or more properties suggested may include: one or more additional attendee entities for the confluence; one or more additional confluence locations to be associated with the confluence; and/or suggestions of potential changes to the future time interval for the confluence (e.g. for the event that the initial future time interval chosen is not appropriate). The client device of the host entity may display the one or more property suggestions.

At step 330-B, one or more properties for the confluence may be received from the client device of the host entity. The received one or more properties may include at least one of the one or more properties suggested, e.g. the received one or more properties may include a confirmation of at least one of the one or more property suggestions for the confluence.

At step 340-B, a proposed attendance mode for the confluence is received, e.g. whether the confluence is to be fully remote or is to be at least partially in person. In an in-person confluence, at least some of the plurality of entities are to be located at one or more precise confluence locations.

At step 350-B, it is determined whether a physical location for the confluence is required, e.g. based on the proposed attendance mode for the confluence received from the client device. If the confluence is to be at least partially in person then a physical location is required. If the confluence is remote then a physical location is not required.

If a physical location is not required then step 352-B is performed, where suggested time periods for the confluence are sent to the client device of the host entity. The suggested time periods are during the future time interval. The suggested time periods may be determined based off any suitable data, e.g. data included in the resource data repository 172, the resource availability data repository 174 and the expected location data repository 178. For example, the suggested time periods may be determined as a plurality of time periods where the plurality of entities are available for a confluence and/or where equipment required for the confluence is available. The suggested time periods may also be based on whether given entities are considered necessary or desirable to a confluence. For example, if there are no time periods within the future time interval where all of the entities are available then time periods where all of the entities considered necessary are available may be suggested. The suggestions may also be based on the preferences of entities, the importance of entities (e.g. as defined by a numerical priority value associated with each entity), e.g. a VIP status of one or more entities, or both. For example, the suggested time periods may be those time periods where all necessary entities are available which are preferred by a VIP entity. The suggestions of time periods may also be based on a priority of the confluence. For example, where the confluence has a high priority, one or more time periods where lower priority confluences are currently scheduled may be included in the suggestions, while, if the confluence has a low priority, time periods where other confluences are already scheduled may be excluded from the suggestions.

If a physical location is required then step 354-B is performed, where suggested time periods and suggested confluence locations are sent to the client device of the host entity. Suggested time periods may be determined as described in relation to step 352-B but will also be dependent on availability of confluence locations as indicated by confluence location data including indications of the availability of each of a set of confluence locations. The confluence location data may be obtained from a confluence location data source. The suggested confluence locations may be a plurality of precise confluence locations. The suggested confluence locations may be determined based on the number of the plurality of entities for the confluence, e.g. a meeting room having a large enough capacity should be allocated. The suggested confluence locations may also be determined based on the preferences of the plurality of entities, e.g. preference data 182. These preferences may include preferences relating to the equipment available at a confluence location; the lighting at a confluence location, e.g. the amount of natural light available; the décor of a confluence location, e.g. whether the confluence location has adequate décor for hosting VIP entities and/or external entities, and where the confluence location is located, e.g. the floor of an office that the confluence location is on. Where entity preferences are used, the preferences of VIP entities may be prioritised.

At step 360-B, a selection of one or more time period options from the suggested time periods is received from the client device of the host entity, e.g. the host entity selects one or more of the suggested time periods as one or more time period options to be sent to the others of the plurality of entities. If a physical location is required, suggested confluence locations may also be selected as one or more confluence location options.

At step 400-B, a preferred time period of the time period options is identified. The step 400-B is described in detail in relation to Figure 11. The step 400-B may also include identifying a preferred confluence location of one or more confluence locations where a physical location is required.

At step 370-B, a confluence is created at the preferred time period. Creating the confluence may include storing details of the confluence to a confluence schedule stored in a database, e.g. the database 150.

At step 380-B, invites to the confluence are sent to the plurality of entities. For example, calendar invites may be sent to the plurality of entities. The calendar invites may be sent in an open calendar invitation format and/or in an application-specific calendar invitation format. The calendar invites may include details of the confluence. The details of the confluence may include the time of the confluence, the subject of the confluence and, if applicable, the location of the confluence. The invites to the confluence may also be messages including the details of the confluence. For example, the invites may be emails, instant messages or text messages including the details of the confluence.

At step 390-B, resources may be allocated for the confluence. Resources may be allocated in a manner similar to that described in relation to step 230-B of the example method 200-B of Figure 9.

### Preferred Time Period Identification Method

Figure 11 illustrates a method 400-B for identifying a preferred time period of one or more time period options according to an embodiment. The method 400-B may be performed as part of the scheduling method 400-B of Figure 10. The method 400-B may be implemented as one or more computer-executable instructions executed on one or more computing devices, e.g. the computing device 500 described in relation to Figure 5. The method 400-B may be performed by the application server side runtime 140 and/or the resource allocation engine 190 described with respect to Figure 1D and/or the resource allocation system 12 described with respect to Figure 1A. Optional steps are indicated via dashed lines.

At step 410-B, it is determined whether there is a single time period option, e.g. whether the one or more time period options consist of only one time period option. If there is a single time period option then the single time period is plainly the preferred time period. Hence, if it is determined that there is a single time period option, step 412- B is performed which identifies the single time period as the preferred time period.

At step 420-B, at least a subset of the time period options are sent to client devices of one or more attendee entities based on the availability and importance of the one or more attendee entities.

The importance of an entity may include indications as to whether the attendance of an entity is optional or required and/or whether an entity is a VIP. The at least a subset of the time period options may be sent to required and/or VIP entities first. This may allow those of the time period options where the required and/or VIP entities are not available to be excluded from a subset of the time period options sent to the client devices of optional attendee entities.

Alternatively or additionally, the at least a subset of the time period options sent to required entities may be larger than the subset of time period options presented to optional entities. For example, there may be one or more of the time period options that the host entity has indicated are possible but undesirable and/or entity preference data indicates are undesirable to at least one of the attendee entities, but at which the at least of one of the attendee entities is expected to be available. These one or more undesirable time period options may be sent to required entities but not to optional attendee entities, as, if the only time period(s) at which the required entities are available are in these one or more undesirable time period options then this may override their undesirableness while the availability of an optional attendee would not.

Alternatively or additionally, the at least a subset of the time period options sent to VIP entities may be larger than the subset of time period options presented to other entities. For example, there may be one or more time period options that the host entity has indicated are feasible but undesirable and/or entity preference data indicates are undesirable, e.g. one or more time period options before and/or after regular working hours. These one or more time period options may not be sent to others of the entities but may be sent to VIP entities, as the attendance of the VIP entities at the confluence may be paramount and their availability may be limited.

At step 430-B, respective selections of one or more of the at least a subset of the time period options are received from the client devices of the one or more attendee entities. Each selection includes indications as to which of the at least a subset of the time period options the respective entity is available based on input from the respective entity. The selection may be binary, e.g. the entity may indicate that they are either available or unavailable at each of the time periods, or the selection may indicate a 'degree of availability' for each of the time periods. For example, in addition to simply indicating whether they are available or unavailable at a time period, it may be possible for a respective entity to indicate that they are not currently available at the time period but could make themselves available if necessary and/or to indicate that they are available but have a strong preference against the time period.

Step 430-B may also include receiving suggestions for one or more different time period options from the client devices of the one or more attendee entities. For example, an entity may indicate that they are unavailable at all of the time period options and submit one or more suggestions of new time period options where they are available. These new time period option suggestions may be submitted through an interactive process whereby the entity is restricted from submitting suggestions for time period options where at least one required entity is known to be unavailable. The use of such an interactive process may be available through an application-specific web or native client interface to entities whose organisations have implementations of the confluence-resource-allocation systems described herein. The use of such an interface may not be available to other entities, e.g. external attendee entities of the confluence. These other entities may make ad hoc suggestions of one or more time period options.

At step 440-B, it is determined whether an optimal time period option is identifiable based on the selection. An optimal time period may be identifiable if there is a single time period at which at least the required attendee entities are available. An optimal time period may also be identifiable if there are multiple time periods where the required attendee entities are available but one of these multiple time periods is clearly preferable. One of these multiple time periods may be clearly preferable for any or any combination of the following reasons: more of the optional attendee entities are available; the preferences of entities as derived from entity preference data and/or from the received selections, e.g. indications of degrees of availability, may indicate that there is a time period that most or all of the entities prefer; and/or preferred confluence equipment and/or confluence locations are available at one of the time periods but not at others of the time periods. An optimal time period may not be identifiable if there is no time period option for which the required entities are available. An optimal time period option may also not be identifiable where there are a plurality of viable time period options. However, in some implementations, one of the plurality of viable time period options may be arbitrarily identified as the optimal time period option. For example, a random one of the plurality of equally viable time period options may be identified as the optimal time period option.

In some implementations, an optimal time period option may be identified even where there is no time period option at which all of the required entities are available. In these situations, while each of the time period options may be disruptive to some extent (e.g. by clashing with another scheduled event for one or more of the entities), the optimal time period option may be identified as the least disruptive of time the period options. To determine which of the time period options is least disruptive, a disruption value may be calculated for each of the time period options. The optimal time period option may be determined as the time period having the lowest disruption value.

The disruption value may be calculated based on one or more factors pertaining to any or any combination of the entities, the availability of the entities and conflicting confluences or other commitments causing the one or more entities to be unavailable. The calculation of the disruption value may be based on the importance of an unavailable one or more entities to the confluence, e.g. whether each of the unavailable one or more entities are considered a VIP, required or optional for the confluence. The calculation of the disruption value may also be based on the importance of the unavailable one or more entities to the conflicting confluence(s) or other commitment(s), e.g. whether each of the one or more entities are considered a VIP, required or optional for the conflicting confluence. For example, if an unavailable entity is considered to be mandatory to the confluence but optional to the conflicting confluence then the disruption value will be lower than if the entity were considered mandatory to the conflicting confluence. The calculation of the disruption value may also be based on whether the conflicting confluence is a recurring confluence. For example, if the conflicting confluence is a daily meeting, e.g. a daily stand-up, then the disruption value may be lower as it may be that missing a single occurrence of a recurrent confluence is less disruptive than missing a one-off meeting. The disruption value may also be calculated based on the number of entities at the conflicting confluence. For example, if the conflicting confluence is a single person confluence involving only one of the unavailable entities, e.g. thinking time for the one of the unavailable entities, or a one-on-one confluence between one of the unavailable entities then the calculated disruption value may be lower than if the conflicting confluence were one involving several entities. The disruption value may also be calculated based on the hierarchical position, e.g. the seniority, of the entities involved in the conflicting confluence, with a higher disruption value calculated if the conflicting confluence involves more senior entities, e.g. senior management.

Such disruption values may be calculated even where an optimal time period option is not identifiable, e.g. where none of the time period options have below a threshold disruption value, and the disruption values, information on which they are based and/or information derived therefrom provided to the client device of the host entity for analysis in step 450-B.

An optimal time period option may be identifiable where there a plurality of viable time period options. In these situations, the optimal time period option may be identified as the most desirable of the time period options. To determine which of the time period options is most desired, a desirability value may be calculated for each of the time period options. The optimal time period option may be determined as the time period option having the greatest desirability value.

The desirability value may be calculated based on one or more factors pertaining to any or any combination of the entities, the time of the time period option, and resources to be allocated for the confluence. The desirability value may be a value which is or is based on a function, e.g. a weighted sum, of per entity desirability weights for a given time period option. The function may weight the per entity desirability weights based on the importance of the respective entity. The per entity desirability weights may be based on expected working hours for the entity. Time period options that come before or shortly after the expected working hours of the entity may be given a lower desirability weight then those fully within the expected working hours. Time period options fully within but close to a start or end of the expected working hours may also be given a lower desirability weight due to, respectively, a likely need for the entity to prepare for a confluence and a possibility of a confluence overrunning. For example for an entity with expected working hours of 09:00 - 17:00, with all other things being equal, a time period option of 08:30 - 09:00 may be given a low desirability weight, the time period option of 09:00 - 09:30 may be given a slightly higher but not maximum desirability weight, and times from 10:00 - 12:00 given a maximum desirability weights. The profile over time of desirability weights for a given entity may be constructed through analysis of a variety of inputs that can include but are not limited to: expected working hours, usual lunch break hours, and working patterns dependent on the day of the week. The desirability weights may additionally or alternatively be based on other confluences of the entity on 09:00 to 11:00, but with no confluences in the afternoon, the time range 14:00 - 16:00 will have a higher desirability weight than the 11:00-14:00 range. The desirability weight may be further based on the proximity of the (suggested) location of the confluence with the location(s) of other confluence(s) for the entity. For example, a time period option which is immediately adjacent in time with another confluence for the entity, but in a location that is in a different building to the (suggested) location will be marked as less desirable than a time period option that would allow for travel time between locations.

The desirability value may additionally or alternatively be calculated based on resources (e.g. locations) allocated to or to be allocated to the confluence. The contribution of these the calculation of the desirability value may be based on configured parameters and/or rules. The rules and/or parameters may be based on environmental factors, e.g. sun exposure may meant that a precise confluence location, such as a meeting room, can get uncomfortably hot in the afternoon. The rules and/or parameters may be based on other confluences scheduled at or near the same location at times proximate to the time period options. For example, the time period option immediately adjacent to a confluence with a large number of attendees may be marked as less desirable than a later time period option that would allow for the room to be aired out and/or the air conditioning used to bring the room to a more comfortable temperature). The rules and/or parameters may be based on energy consumption reduction factors. For example, in smart buildings, air conditioning may be activated or deactivated based on whether presence is detected or expected in a precise confluence location. In this case, the desirability values may be higher for time period options immediately adjacent to other confluences at the same precise confluence location than time period options that are isolated. As in the case of isolated time period options, a temperature control system would have to bring the room to temperature for the confluence instead of maintaining a temperature level already established by adjacent confluences.

Such desirability values may be calculated even where an optimal time period option is not identifiable, e.g. where the difference in the desirability value for a highest and second highest is not greater than an automatic selection threshold, and the desirability values, information on which they are based and/or information derived therefrom provided to the client device of the host entity for analysis in step 450.

Step 442-B is performed if an optimal time period option has been determined to be identifiable in step 440. At step 442-B, the optimal time period is identified as the preferred time period.

Step 450-B is performed if an optimal time period has been determined not to be identifiable in step 440. At step 450, the selection(s) of the one or more of the at least a subset of the time period options received from the client devices of the one or more attendee entities are sent to the client device of the host entity. These selections may be displayed to the host entity by their client device for analysis by the host entity. Step 450 may also include sending, to the client device of the host entity, suggestions for one or more time period options received from the client devices of attendee entities.

At step 460-B, a response to the sent selection(s) of the one or more of the at least a subset of the time period options is received from the host entity. This response may indicate one or more amendments to the time period options or a chosen time period option.

At step 470-B, it is determined whether the response received from the client device of the host entity indicates any amendments to the time period options, e.g. removals, changes and/or additions to the time period options. If it is determined that the response includes one or more amendments, a step 472-B is performed. At step 472-B, the time period options are amended based on the amendments indicated by the response then execution is returned to step 420-B.

The amendments to the time period options received may be based on the suggestions received from the client devices of one or more attendee entities. These suggestions may be analysed by the host entity who may amend the time period options to include one or more of the suggestions, e.g. one or more of the suggestions where the host entity expects it is most likely that the required entities are available. In some implementations, amendments to time period options may be performed automatically based on suggestions from one or more of the attendee entities, e.g. without input from the host entity.

Execution continues to step 480-B if it is determined that the response does not indicate amendments to the time period options. At step 480-B, it is determined whether the response received from the client device of the host entity indicates a chosen time period option. For example, there may have been several equally viable time period options identifiable based on the selections and the host entity may have chosen one of these viable time period options.

If a time period is chosen, then the chosen time period is identified as the preferred time period at step 490-B. If no time period is chosen, then execution is returned to step 420-B.

It should be noted that whilst the above methods show steps in a certain order, these steps may be rearranged whilst achieving the same overall functionality. For instance, in method 400-B of Figure 11, the order of steps 470-B and 480-B may be swapped, with step 470-B being executed if no time period is chosen.

Implementations of the subject matter and the operations described in this specification can be realized in digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

## Claims

1. A system (1) for regulating an environment of one or more areas of a building, comprising:
an environment system (11) for altering the environment of the one or more areas of the building;
a control system (13) comprising one or more processors, the one or more processors configured to:
obtain one or more control parameters, wherein the one or more control parameters are derived using an indication of an allocation of one or more resources at a viable time period for at least one event of a series of recurring events, and wherein at least one of the one or more resources is proximate to at least one of the one or more areas of the building; and
operate the environment system (11) using the one or more control parameters to obtain one or more environmental conditions of the at least one of the one or more areas of the building at the viable time period, wherein the control system (13) is configured to determine an expected occupancy based on the indication of the allocation of the one or more resources at the viable time period, the expected occupancy being a number of persons expected to be located proximate to at least one of the one or more areas of the building at the viable time period, and wherein the one or more environmental conditions is derived based on the number of persons; and
a resource allocation system (12) comprising one or more processors, the one or more processors configured to:
receive one or more requests to allocate the one or more resources to the series of recurring events, wherein the one or more requests specify, for each event, a corresponding desired time period over which the one or more resources are to be allocated, and the one or more requests further specify one or more adjustment criteria for defining, for one or more of the events, one or more permissibly adjusted time periods from the desired time period;
obtain, for each event, resource availability data indicative of an availability of the one or more resources during the desired time period; and
for each event:
determine, based on the resource availability data, a viable time period, wherein the viable time period is either the desired time period or a permissibly adjusted time period that satisfies one or more adjustment criteria; and
allocate the one or more resources to the viable time period.

2. The system of any preceding claim, further comprising:
a control interface (14) comprising one or more processors, the one or more processors configured to:
obtain the indication of the allocation of one or more resources at the viable time period for at least one event of a series of recurring events;
derive the one or more control parameters using the indication of the allocation of the one or more resources at the viable time period; and
send, to the control system (14), the one or more control parameters.

3. The system of any preceding claim, wherein the environment system (11) comprises any or any combination of:
a heating system (11-1) for heating the at least one of the one or more areas of the building;
a cooling system (11-2) for cooling the at least one of the one or more areas of the building;
a lighting system (11-3) for lighting the at least one of the one or more areas of the building;
a ventilation system (11-4) for ventilating the at least one of the one or more areas; and/or
an air quality improvement system (11-5) for improving the air quality of the at least one of the one or more areas of the building.

4. The system of any preceding claim, wherein the one or more environmental conditions of the at least one of the one or more areas of the building comprise any or any combination of:
a temperature of the at least one of the one or more areas of the building;
lighting of the at least one of the one or more areas of the building; and/or
an air quality of the at least one or more areas of the building.

5. The system of any preceding claim, wherein the operation of the environment system (11) is initiated at a preparation time prior to the viable time period.

6. The system of claim 5, wherein the preparation time is based on an amount of time required to obtain the one or more environmental conditions using the environment control system.

7. The system of claim 6, wherein the one or more environmental conditions comprises a temperature of the at least one of the one or more areas of the building, and wherein the amount of time is based on a heating and/or cooling curve.

8. The system of claim 6 or claim 7, wherein the amount of time is based on the number of persons proximate to the at least one of the one or more areas of the building at the viable time period.

9. A computer-implemented method for regulating an environment of one or more areas of a building, comprising:
receiving one or more requests to allocate one or more resources to a series of recurring events, wherein the one or more requests specify, for each event, a corresponding desired time period over which the one or more resources are to be allocated, and the one or more requests further specify one or more adjustment criteria for defining, for one or more of the events, one or more permissibly adjusted time periods from the desired time period;
obtaining, for each event, resource availability data indicative of an availability of the one or more resources during the desired time period;
for each event, determining, based on the resource availability data, a viable time period, wherein the viable time period is either the desired time period or a permissibly adjusted time period that satisfies the one or more adjustment criteria;
allocating the one or more resources to the viable time period;
receiving one or more control parameters, wherein the one or more control parameters are based on an indication of the allocation of the one or more resources at the viable time period for at least one event of the series of recurring events, and wherein the at least one of the one or more resources is proximate to the at least one of the one or more areas of the building;
determining an expected occupancy based on the indication of the allocation of the one or more resources at the viable time period, the expected occupancy being a number of persons expected to be located proximate to at least one of the one or more areas of the building at the viable time period;
deriving, based on the number of persons, one or more environmental conditions of the at least one of the one or more areas of the building at the viable time period; and
operating an environment system (11) for altering the environment of the one or more areas of the building using the one or more control parameters to obtain the one or more environmental conditions.

10. The method of claim 9, further comprising:
obtaining the indication of the allocation of one or more resources at the viable time period for the at least one event of the series of recurring events; and
deriving the one or more control parameters using the indication of the allocation of the one or more resources for the at least one event of the series of recurring events.

11. The method of claim 9 or claim 10, wherein the derivation of the one or more control parameters additionally uses an indication of an allocation of one or more resources at a second viable time period for a second at least one event of a second series of recurring events.

12. The method of any one of claims 9 - 11, wherein the one or more resources comprise one or more locations.

13. The method of any one of claims 9 - 12, wherein the one or more resources comprise one or more persons.

14. The method of any one of claims 9 - 13, wherein, for at least one event of the series of recurring events, determining the viable time period comprises:
determining, based on the resource availability data, that at least one of the one or more resources is unavailable at the desired time period;
in response to determining that the at least one of the one or more resources is unavailable at the desired time period, determining the one or more permissibly adjusted time periods from the one or more adjustment criteria; and
setting the viable time period to be one of the one or more permissibly adjusted time periods.

## Patentansprüche

1. System (1) zum Regulieren einer Umgebung eines oder mehrerer Bereiche eines Gebäudes, Folgendes umfassend:
ein Umgebungssystem (11) zum Ändern der Umgebung des einen oder der mehreren Bereiche des Gebäudes;
ein Steuerungssystem (13), das einen oder mehrere Prozessoren umfasst, wobei der eine oder die mehreren Prozessoren konfiguriert sind, um:
einen oder mehrere Steuerungsparameter zu erhalten, wobei der eine oder die mehreren Steuerungsparameter abgeleitet werden unter Verwendung einer Angabe einer Zuweisung von einer oder mehreren Ressourcen zu einer durchführbaren Zeitspanne für mindestens ein Ereignis einer Reihe von wiederkehrenden Ereignissen, und wobei sich mindestens eine der einen oder der mehreren Ressourcen unmittelbar an einem oder mehreren Bereichen des Gebäudes befindet; und
das Umgebungssystem (11) zu betreiben unter Verwendung des einen oder der mehreren Steuerungsparameter, um eine oder mehrere Umgebungsbedingungen des mindestens einen des einen oder der mehreren Bereiche des Gebäudes zu der durchführbaren Zeitspanne zu erhalten, wobei das Steuerungssystem (13) konfiguriert ist, um eine erwartete Belegung zu bestimmen, basierend auf der Angabe der Zuweisung der einen oder der mehreren Ressourcen zu der durchführbaren Zeitspanne, wobei die erwartete Belegung eine Anzahl von Personen ist, von der erwartet wird, dass sie sich zu der durchführbaren Zeitspanne unmittelbar an mindestens einem des einen oder der mehreren Bereiche des Gebäudes befinden, und wobei die eine oder die mehreren Umgebungsbedingungen abgeleitet werden, basierend auf der Anzahl von Personen; und
ein Ressourcenzuweisungssystem (12), das einen oder mehrere Prozessoren umfasst, wobei der eine oder die mehreren Prozessoren konfiguriert sind, um:
eine oder mehrere Anfragen zu empfangen, um die eine oder die mehreren Ressourcen der Reihe von wiederkehrenden Ereignissen zuzuweisen, wobei die eine oder die mehreren Anfragen für jedes Ereignis eine entsprechende gewünschte Zeitspanne präzisieren, während der die eine oder die mehreren Ressourcen zugewiesen werden sollen, und die eine oder die mehreren Anfragen ferner eines oder mehrere Anpassungskriterien präzisieren zum Definieren, für eines oder mehrere der Ereignisse, von einer oder mehreren zulässig angepassten Zeitspannen von der gewünschten Zeitspanne;
für jedes Ereignis Ressourcenverfügbarkeitsdaten zu erhalten, die eine Verfügbarkeit der einen oder der mehreren Ressourcen während der gewünschten Zeitspanne angeben; und für jedes Ereignis:
eine durchführbare Zeitspanne zu bestimmen, basierend auf den Ressourcenverfügbarkeitsdaten, wobei die durchführbare Zeitspanne entweder die gewünschte Zeitspanne oder eine zulässig angepasste Zeitspanne ist, die eines oder mehrere Anpassungskriterien erfüllt; und
die eine oder die mehreren Ressourcen der durchführbaren Zeitspanne zuzuweisen.

2. System nach einem der vorhergehenden Anspruch, ferner umfassend:
eine Steuerungsschnittstelle (14), die einen oder mehrere Prozessoren umfasst, wobei der eine oder die mehreren Prozessoren konfiguriert sind, um:
die Angabe der Zuweisung einer oder mehrerer Ressourcen zu der durchführbaren Zeitspanne für mindestens ein Ereignis einer Reihe von wiederkehrenden Ereignissen zu erhalten;
den einen oder die mehreren Steuerungsparameter abzuleiten unter Verwendung der Angabe der Zuweisung der einen oder mehreren Ressourcen zu der durchführbaren Zeitspanne; und
den einen oder die mehreren Steuerungsparameter an das Steuerungssystem (14) zu senden.

3. System nach einem der vorhergehenden Ansprüche, wobei das Umgebungssystem (11) eines oder eine Kombination aus Folgendem umfasst:
ein Heizsystem (11-1) zum Heizen des mindestens einen des einen oder der mehreren Bereiche des Gebäudes
ein Kühlsystem (11-2) zum Kühlen des mindestens einen des einen oder der mehreren Bereiche des Gebäudes
ein Beleuchtungssystem (11-3) zum Beleuchten des mindestens einen des einen oder der mehreren Bereiche des Gebäudes
ein Belüftungssystem (11-4) zum Belüften des mindestens einen des einen oder der mehreren Bereiche; und/oder
ein Luftqualitätsverbesserungssystem (11-5) zum Verbessern der Luftqualität des mindestens einen des einen oder der mehreren Bereiche des Gebäudes.

4. System nach einem der vorhergehenden Ansprüche, wobei die eine oder die mehreren Umgebungsbedingungen des mindestens einen des einen oder der mehreren Bereiche des Gebäudes eines oder eine Kombination aus Folgendem umfassen:
eine Temperatur des mindestens einen des einen oder der mehreren Bereiche des Gebäudes;
Beleuchtung des mindestens einen des einen oder der mehreren Bereiche des Gebäudes; und/oder
eine Luftqualität des mindestens einen oder der mindestens mehreren Bereiche des Gebäudes.

5. System nach einem der vorhergehenden Ansprüche, wobei der Betrieb des Umgebungssystems (11) zu einer Vorbereitungszeit vor der durchführbaren Zeitspanne eingeleitet wird.

6. System nach Anspruch 5, wobei die Vorbereitungszeit auf einer Menge von Zeit basiert, die erforderlich ist, um die eine oder die mehreren Umgebungsbedingungen unter Verwendung des Umgebungssteuerungssystems zu erhalten.

7. System nach Anspruch 6, wobei die eine oder die mehreren Umgebungsbedingungen eine Temperatur des mindestens einen des einen oder der mehreren Bereiche des Gebäudes umfassen, und wobei die Menge von Zeit auf einer Heizund/oder Kühlkurve basiert.

8. System nach Anspruch 6 oder Anspruch 7, wobei die Menge von Zeit auf der Anzahl von Personen basiert, die sich zu der durchführbaren Zeitspanne unmittelbar an dem mindestens einen des einen oder der mehreren Bereiche des Gebäudes befinden.

9. Computerimplementiertes Verfahren zum Regulieren einer Umgebung eines oder mehrerer Bereiche eines Gebäudes, Folgendes umfassend:
Empfangen einer oder mehrerer Anfragen, um eine oder mehrere Ressourcen einer Reihe von wiederkehrenden Ereignissen zuzuweisen, wobei die eine oder die mehreren Anfragen für jedes Ereignis eine entsprechende gewünschte Zeitspanne präzisieren, während der die eine oder die mehreren Ressourcen zugewiesen werden sollen, und die eine oder die mehreren Anfragen ferner eines oder mehrere Anpassungskriterien präzisieren zum Definieren, für eines oder mehrere der Ereignisse, von einer oder mehreren zulässig angepassten Zeitspannen von der gewünschten Zeitspanne;
Erhalten, für jedes Ereignis, von Ressourcenverfügbarkeitsdaten, die eine Verfügbarkeit von der einen oder den mehreren Ressourcen während der gewünschten Zeitspanne angeben;
Bestimmen, für jedes Ereignis, basierend auf den Ressourcenverfügbarkeitsdaten, einer durchführbaren Zeitspanne, wobei die durchführbare Zeitspanne entweder die gewünschte Zeitspanne oder eine zulässig angepasste Zeitspanne ist, die das eine oder die mehreren Anpassungskriterien erfüllt;
Zuweisen der einen oder der mehreren Ressourcen an die durchführbare Zeitspanne;
Empfangen von einem oder mehreren Steuerungsparametern, wobei der eine oder die mehreren Steuerungsparameter auf einer Angabe der Zuweisung der einen oder der mehreren Ressourcen zu der durchführbaren Zeitspanne für mindestens ein Ereignis der Reihe von wiederkehrenden Ereignissen basieren, und wobei sich die mindestens eine der einen oder der mehreren Ressourcen unmittelbar an dem mindestens einen des einen oder der mehreren Bereiche des Gebäudes befindet;
Bestimmen einer erwarteten Belegung, basierend auf der Angabe der Zuweisung der einen oder der mehreren Ressourcen zu der durchführbaren Zeitspanne, wobei die erwartete Belegung eine Anzahl von Personen ist, von der erwartet wird, dass sie sich zu der durchführbaren Zeitspanne unmittelbar an mindestens einem des einen oder der mehreren Bereiche des Gebäudes befinden;
Ableiten, basierend auf der Anzahl von Personen, einer oder mehrerer Umgebungsbedingungen des mindestens einen des einen oder der mehreren Bereiche des Gebäudes zu der durchführbaren Zeitspanne; und
Betreiben eines Umgebungssystems (11) zum Ändern der Umgebung des einen oder der mehreren Bereiche des Gebäudes unter Verwendung des einen oder der mehreren Steuerungsparameter, um die eine oder die mehreren Umgebungsbedingungen zu erhalten.

10. Verfahren nach Anspruch 9, ferner umfassend:
Erhalten der Angabe der Zuweisung von einer oder mehreren Ressourcen zu der durchführbaren Zeitspanne für das mindestens eine Ereignis der Reihe von wiederkehrenden Ereignissen; und
Ableiten des einen oder der mehreren Steuerungsparameter unter Verwendung der Angabe der Zuweisung der einen oder der mehreren Ressourcen für das mindestens eine Ereignis der Reihe von wiederkehrenden Ereignissen.

11. Verfahren nach Anspruch 9 oder Anspruch 10, wobei das Ableiten des einen oder der mehreren Steuerungsparameter zusätzlich eine Angabe einer Zuweisung von einer oder mehreren Ressourcen zu einer zweiten durchführbaren Zeitspanne für ein zweites mindestens ein Ereignis einer zweiten Reihe von wiederkehrenden Ereignissen verwendet.

12. Verfahren nach einem der Ansprüche 9 bis 11, wobei die eine oder die mehreren Ressourcen einen oder mehrere Standorte umfassen.

13. Verfahren nach einem der Ansprüche 9 bis 12, wobei die eine oder die mehreren Ressourcen eine oder mehrere Personen umfassen.

14. Verfahren nach einem der Ansprüche 9 bis 13, wobei, für mindestens ein Ereignis der Reihe von wiederkehrenden Ereignissen, das Bestimmen der durchführbaren Zeitspanne Folgendes umfasst:
Bestimmen, basierend auf den Ressourcenverfügbarkeitsdaten, dass mindestens eine der einen oder der mehreren Ressourcen zu der gewünschten Zeitspanne nicht verfügbar ist;
als Antwort auf das Bestimmen, dass die mindestens eine der einen oder der mehreren Ressourcen zu der gewünschten Zeitspanne nicht verfügbar ist, Bestimmen der einen oder der mehreren zulässig angepassten Zeitspannen von dem einen oder den mehreren Anpassungskriterien; und
Einstellen der durchführbaren Zeitspanne als eine der einen oder der mehreren zulässig angepassten Zeitspannen.

## Revendications

1. Système (1) pour réguler un environnement d'une ou de plusieurs zones d'un bâtiment comprenant :
un système d'environnement (11) pour modifier l'environnement des une ou plusieurs zones du bâtiment ;
un système de commande (13) comprenant un ou plusieurs processeurs, les un ou plusieurs processeurs étant configurés pour :
obtenir un ou plusieurs paramètres de commande, dans lequel les un ou plusieurs paramètres de commande sont dérivés en utilisant une indication d'une allocation d'une ou de plusieurs ressources à une période de temps viable pour au moins un événement d'une série d'événements récurrents, et dans lequel au moins une des une ou plusieurs ressources est à proximité d'au moins une des une ou plusieurs zones du bâtiment ; et
faire fonctionner le système d'environnement (11) en utilisant les un ou plusieurs paramètres de commande pour obtenir une ou plusieurs conditions environnementales de l'au moins une des une ou plusieurs zones du bâtiment à la période de temps viable, dans lequel le système de commande (13) est configuré pour déterminer une occupation prévue sur la base de l'indication de l'allocation des une ou plusieurs ressources à la période de temps viable, l'occupation prévue étant un nombre de personnes censées se trouver à proximité d'au moins une des une ou plusieurs zones du bâtiment à la période de temps viable, et dans lequel les une ou plusieurs conditions environnementales sont dérivées sur la base du nombre de personnes ; et
un système d'allocation de ressources (12) comprenant un ou plusieurs processeurs, les un ou plusieurs processeurs étant configurés pour :
recevoir une ou plusieurs demandes d'allocation d'une ou plusieurs ressources à la série d'événements récurrents, les une ou plusieurs demandes spécifiant, pour chaque événement, une période de temps souhaitée correspondante pendant laquelle les une ou plusieurs ressources doivent être allouées, et les une ou plusieurs demandes spécifiant en outre un ou plusieurs critères d'ajustement pour définir, pour un ou plusieurs des événements, une ou plusieurs périodes de temps ajustées de manière admissible à partir de la période de temps souhaitée ;
obtenir, pour chaque événement, des données de disponibilité de ressources indiquant une disponibilité des une ou plusieurs ressources au cours de la période de temps souhaitée ; et pour chaque événement :
déterminer, sur la base des données de disponibilité de ressources, une période de temps viable, la période de temps viable étant soit la période de temps souhaitée, soit une période de temps ajustée de manière admissible qui satisfait à un ou plusieurs critères d'ajustement ; et
allouer les une ou plusieurs ressources à la période de temps viable.

2. Système selon l'une quelconque de la revendication précédente, comprenant en outre :
une interface de commande (14) comprenant un ou plusieurs processeurs, les un ou plusieurs processeurs étant configurés pour :
obtenir l'indication de l'allocation d'une ou de plusieurs ressources à la période de temps viable pour au moins un événement d'une série d'événements récurrents ;
dériver les un ou plusieurs paramètres de commande en utilisant l'indication de l'allocation des une ou plusieurs ressources à la période de temps viable ; et
envoyer au système de commande (14) les un ou plusieurs paramètres de commande.

3. Système selon l'une quelconque des revendications précédentes, dans lequel le système d'environnement (11) comprend un quelconque élément ou une quelconque combinaison d'éléments parmi :
un système de chauffage (11-1) pour chauffer l'au moins une des une ou plusieurs zones du bâtiment
un système de refroidissement (11-2) pour refroidir l'au moins une des une ou plusieurs zones du bâtiment
un système d'éclairage (11-3) pour éclairer l'au moins une des une ou plusieurs zones du bâtiment
un système de ventilation (11-4) pour ventiler l'au moins une des une ou plusieurs zones ; et/ou
un système d'amélioration de la qualité de l'air (11-5) pour améliorer la qualité de l'air de l'au moins une des une ou plusieurs zones du bâtiment.

4. Système selon l'une quelconque des revendications précédentes, dans lequel les une ou plusieurs conditions environnementales de l'au moins une des une ou plusieurs zones du bâtiment comprennent un quelconque élément ou une quelconque combinaison d'éléments parmi :
une température de l'au moins une des une ou plusieurs zones du bâtiment ;
un éclairage de l'au moins une des une ou plusieurs zones du bâtiment ; et/ou
une qualité de l'air des au moins une ou plusieurs zones du bâtiment.

5. Système selon l'une quelconque des revendications précédentes, dans lequel le fonctionnement du système d'environnement (11) est initié à un temps de préparation précédant la période de temps viable.

6. Système selon la revendication 5, dans lequel le temps de préparation est basé sur une durée nécessaire pour obtenir les une ou plusieurs conditions environnementales en utilisant le système de commande dd l''environnement.

7. Système selon la revendication 6, dans lequel les une ou plusieurs conditions environnementales comprennent une température de l'au moins une des une ou plusieurs zones du bâtiment, et dans lequel la durée est basée sur une courbe de chauffage et/ou de refroidissement.

8. Système selon la revendication 6 ou la revendication 7, dans lequel la durée est basée sur le nombre de personnes se trouvant à proximité de l'au moins une des une ou plusieurs zones du bâtiment à la période de temps viable.

9. Procédé mis en œuvre par ordinateur pour réguler un environnement d'une ou de plusieurs zones d'un bâtiment comprenant :
la réception d'une ou de plusieurs demandes d'allocation d'une ou plusieurs ressources à une série d'événements récurrents, les une ou plusieurs demandes spécifiant, pour chaque événement, une période de temps souhaitée correspondante pendant laquelle les une ou plusieurs ressources doivent être allouées, et les une ou plusieurs demandes spécifiant en outre un ou plusieurs critères d'ajustement pour définir, pour un ou plusieurs des événements, une ou plusieurs périodes de temps ajustées de manière admissible à partir de la période de temps souhaitée ;
l'obtention, pour chaque événement, des données de disponibilité de ressources indiquant une disponibilité des une ou plusieurs ressources au cours de la période de temps souhaitée ;
pour chaque événement, la détermination, sur la base des données de disponibilité de ressources, d'une période de temps viable, la période de temps viable étant soit la période de temps souhaitée, soit une période de temps ajustée de manière admissible qui satisfait aux un ou plusieurs critères d'ajustement ;
l'allocation des une ou plusieurs ressources à la période de temps viable ;
la réception d'un ou de plusieurs paramètres de commande, dans lequel les un ou plusieurs paramètres de commande sont basés sur une indication de l'allocation des une ou plusieurs ressources à la période de temps viable pour au moins un événement de la série d'événements récurrents, et dans lequel l'au moins une des une ou plusieurs ressources est à proximité de l'au moins une des une ou plusieurs zones du bâtiment ;
la détermination d'une occupation prévue sur la base de l'indication de l'allocation des une ou plusieurs ressources à la période de temps viable, l'occupation prévue étant un nombre de personnes censées se trouver à proximité d'au moins une des une ou plusieurs zones du bâtiment à la période de temps viable ;
la déduction, sur la base du nombre de personnes, d'une ou de plusieurs conditions environnementales de l'au moins une des une ou plusieurs zones du bâtiment à la période de temps viable ; et
le fait de faire fonctionner un système d'environnement (11) pour modifier l'environnement des une ou plusieurs zones du bâtiment en utilisant les un ou plusieurs paramètres de commande pour obtenir les une ou plusieurs conditions environnementales.

10. Procédé selon la revendication 9, comprenant en outre :
l'obtention de l'indication de l'allocation d'une ou de plusieurs ressources à la période de temps viable pour l'au moins un événement de la série d'événements récurrents ; et
la déduction des un ou plusieurs paramètres de commande en utilisant l'indication de l'allocation des une ou plusieurs ressources pour l'au moins un événement de la série d'événements récurrents.

11. Procédé selon la revendication 9 ou la revendication 10, dans lequel la dérivation des un ou plusieurs paramètres de commande utilise de plus une indication d'une allocation d'une ou de plusieurs ressources à une deuxième période de temps viable pour un deuxième au moins un événement d'une deuxième série d'événements récurrents.

12. Procédé selon l'une quelconque des revendications 9 à 11, dans lequel les une ou plusieurs ressources comprennent un ou plusieurs emplacements.

13. Procédé selon l'une quelconque des revendications 9 à 12, dans lequel les une ou plusieurs ressources comprennent une ou plusieurs personnes.

14. Procédé selon l'une quelconque des revendications 9 à 13, dans lequel, pour au moins un événement de la série d'événements récurrents, la détermination de la période de temps viable comprend :
la détermination, sur la base des données de disponibilité de ressources, qu'au moins une des une ou plusieurs ressources est indisponible à la période de temps souhaitée ;
en réponse à la détermination que l'au moins une des une ou plusieurs ressources est indisponible à la période de temps souhaitée, la détermination des une ou plusieurs périodes de temps ajustées de manière admissible à partir des un ou plusieurs critères d'ajustement ; et
le réglage de la période de temps viable comme étant une des une ou plusieurs périodes de temps ajustées de manière admissible.
